(19)

Europäisches Patentamt
European Patent Office
Office européen des brevets

(11) Veröffentlichungsnummer: **0 201 596 B1**

(12) # EUROPÄISCHE PATENTSCHRIFT

(45) Veröffentlichungstag der Patentschrift: **26.02.92**

(51) Int. Cl.5: **G03B 23/02**

(21) Anmeldenummer: **85906055.0**

(22) Anmeldetag: **12.11.85**

(86) Internationale Anmeldenummer: **PCT/EP85/00614**

(87) Internationale Veröffentlichungsnummer: **WO 86/03028 (22.05.86 86/11)**

(54) **VORRICHTUNG ZUM ZYKLISCHEN UMSCHICHTEN EINES STAPELS RECHTECKIGER ODER OUADRATISCHER BLÄTTER.**

(30) Priorität: **13.11.84 DE 3441482**

(43) Veröffentlichungstag der Anmeldung: **20.11.86 Patentblatt 86/47**

(45) Bekanntmachung des Hinweises auf die Patenterteilung: **26.02.92 Patentblatt 92/09**

(84) Benannte Vertragsstaaten: **AT BE CH DE FR GB IT LI NL SE**

(56) Entgegenhaltungen:
**EP-A- 0 113 057**
**DE-A- 3 014 394**
**FR-A- 2 403 207**

**See also references of WO8603028**

(73) Patentinhaber: **LICINVEST AG**
**Hartbertstrasse 9**
**CH-7002 Chur(CH)**

(72) Erfinder: **ACKERET, Peter**
**Allmendstrasse 18**
**CH-8700 Küsnacht(CH)**

(74) Vertreter: **Sparing Röhl Henseler Patentanwälte European Patent Attorneys**
**Rethelstrasse 123**
**W-4000 Düsseldorf 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft eine Vorrichtung zum zyklischen Umschichten eines Stapels rechteckiger Blätter oder einen sogenannten "Bildwechsler" mit den Merkmalen, die im Oberbegriff des Patentanspruchs 1 genannt sind und auch in dem Bildwechsler gemäß EP-A 113 057 vorliegen.

Bildwechsler sind aus den US-Patentschriften 4.238.898, 4.238.899, 4.241.528, 4.241.529, 4.245.417, 4.259.802 und 4.376.348 bekannt. Ihnen allen liegt das Prinzip zugrunde, daß ein Stapel von Bildern, wobei insbesondere an Fotoabzüge zu denken ist, von zwei relativ zueinander verschieblichen Rahmenteilen aufgenommen ist, von denen eines ein Betrachtungsfenster aufweisen kann. Jeweils bei einem vollständigen Bewegungszyklus der Rahmenteile - das heißt vollständig auseinanderziehen und wieder vollständig zusammenschieben - wird ein Bild an einem Stapelende abgenommen und am anderen Stapelende wieder zugefügt. Hierfür weisen die Bildwechsler die folgenden Komponenten auf:
Eine Trenneinrichtung löst ein Einzelbild vom Stapel; eine Zufuhreinrichtung führt der Trenneinrichtung Bilder zu; eine erste Halteeinrichtung hält das vom Stapel abgetrennte Einzelbild in einem der Rahmenteile, während der Reststapel im andern Rahmenteil von einer zweiten Halteeinrichtung gehalten wird; eine Leiteinrichtung führt das abgetrennte Einzelbild so, daß es auf die andere Seite des Reststapels gelangt.

Ein schwieriges Problem liegt bei Bildwechslern darin, daß es unter Umständen sehr hoher Kräfte bedarf, um das Einzelblatt vom Reststapel zu trennen, insbesondere dann, wenn die Blätter wegen statischer Aufladung oder bei Feuchtigkeit fest aneinander haften. Diese Verhältnisse liegen zum Beispiel bei Fotoabzügen vor, für deren zyklisches Umschichten die Vorrichtung gemäß der Erfindung besonders gedacht ist.

Bei allen eingangs genannten Bildwechslern greift an dem zu vereinzelnden Blatt auf seiner freiliegenden, dem Stapel abgekehrten Seite ein Haftelement an, dessen Reibungskoeffizient mit dem Material der Blätter größer sein soll als der zwischen zwei Blättern vorliegende Reibungskoeffizient. Dieses Haftelement dient als Zufuhreinrichtung und bildet selbst zumindest ein Element der ersten Halteeinrichtung.

Eine solche, ausschließlich auf Haftreibung beruhende Zufuhr- und Halteeinrichtung hat sich jedoch für die Zufuhrfunktion nicht bewährt; insbesondere kommt es gelegentlich vor, daß ein Blatt um eine zu seiner Ebene senkrechte Achse verdreht wird, was zu einer Beschädigung des Blattes im weiteren Verlauf des Wechselvorgangs führen kann.

Aufgabe der Erfindung ist es, eine Vorrichtung nach dem Oberbegriff des Patentanspruchs 1 mit einer zuverlässigen Zufuhreinrichtung zu schaffen.

Diese Aufgabe wird durch die kennzeichnenden Merkmale des Patentanspruchs 1 gelöst.

Eine solche Vorrichtung beruht also nicht auf dem Reibungsschluß zwischen Zufuhreinrichtung und abzutrennendem Blatt, sondern auf Formschluß und ist damit erheblich zuverlässiger. Außerdem ist die Gefahr der Verdrehung des Blattes weitgehend eliminiert.

Die Unteransprüche definieren bevorzugte Weiterbildungen des der Erfindung zugrundeliegenden Konzepts.

Die Figuren 1-10 stellen ein erstes vollständiges Ausführungsbeispiel dar, und zwar sind

Fig. 1 eine teilweise geschnittene Draufsicht auf die Vorrichtung, zum Teil auseinandergezogen,
Fig. 2 ein Schnitt nach Linie 2-2 der Fig. 1,
Fig. 3 ein Schnitt nach Linie 3-3 der Fig. 1,
Fig. 4 ein Schnitt nach Linie 4-4 der Fig. 1,
Fig. 5 ein analoger Schnitt nur durch ein Rahmenteil,
Fig. 6 ein Schnitt nach Linie 6-6 der Fig. 1,
Fig. 7 ein Teilschnitt durch den Separatorsteg,
Fig. 8 eine Teilfrontansicht des Separatorsteges,
Fig. 9 eine vergrößerte Teilansicht einer Baugruppe aus Fig. 1,
Fig. 10 eine Draufsicht auf die Baugruppe nach Fig. 9.

Die Fig. 11 und 12 stellen analog zu Fig. 9, jedoch in zwei Funktionsstellungen eine alternativ ausgestaltete Baugruppe dar.

Fig. 13 bis 33 betreffen ein zweites Ausführungsbeispiel, und es zeigen

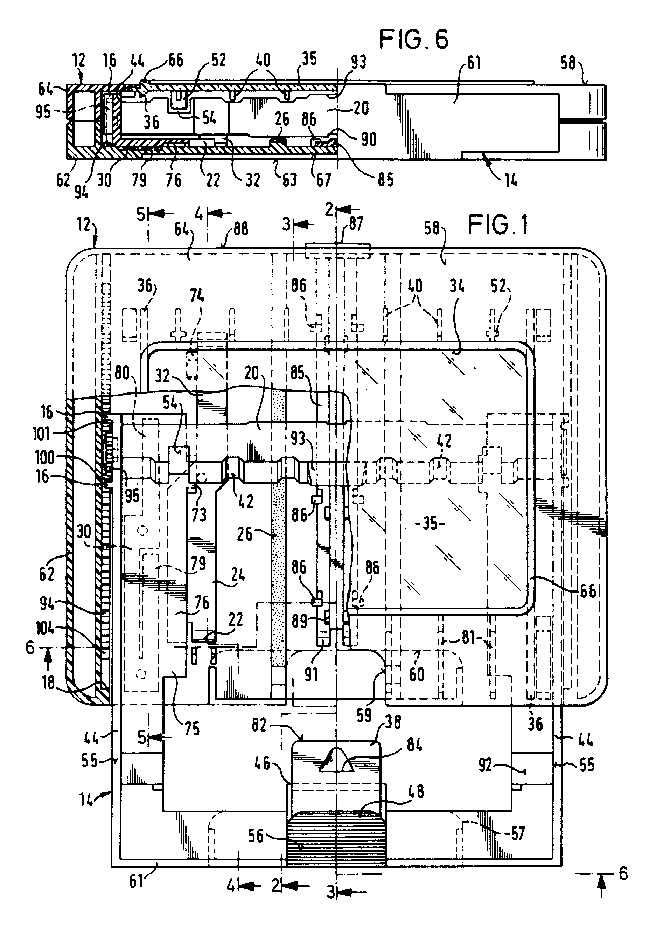

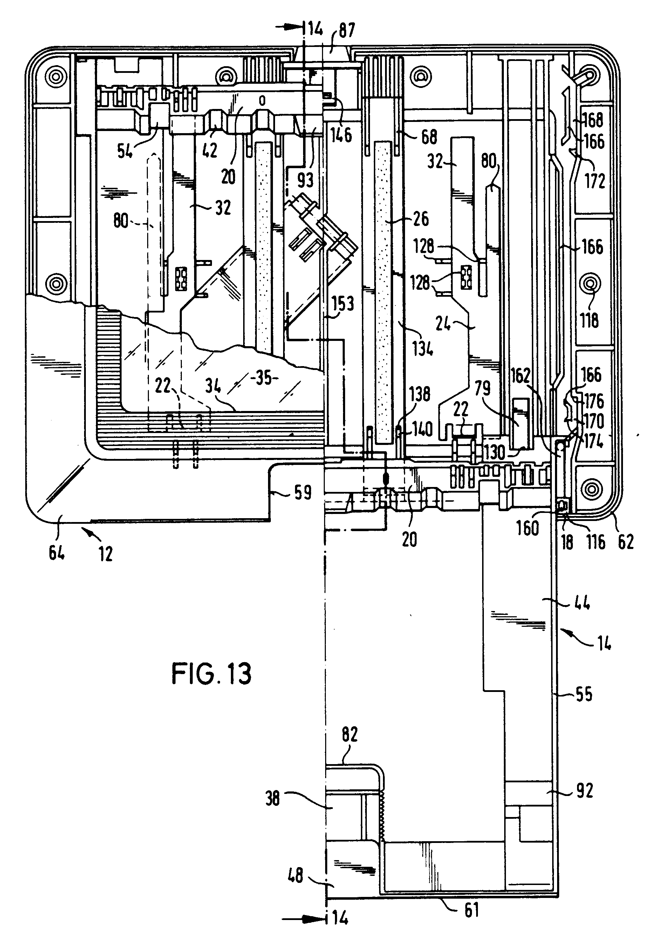

Fig. 13 eine Draufsicht ähnlich Fig. 1, wobei jedoch in der linken Hälfte der Fig. die Rahmenteile zusammengeschoben sind, in der rechten dagegen auseinandergezogen sind,

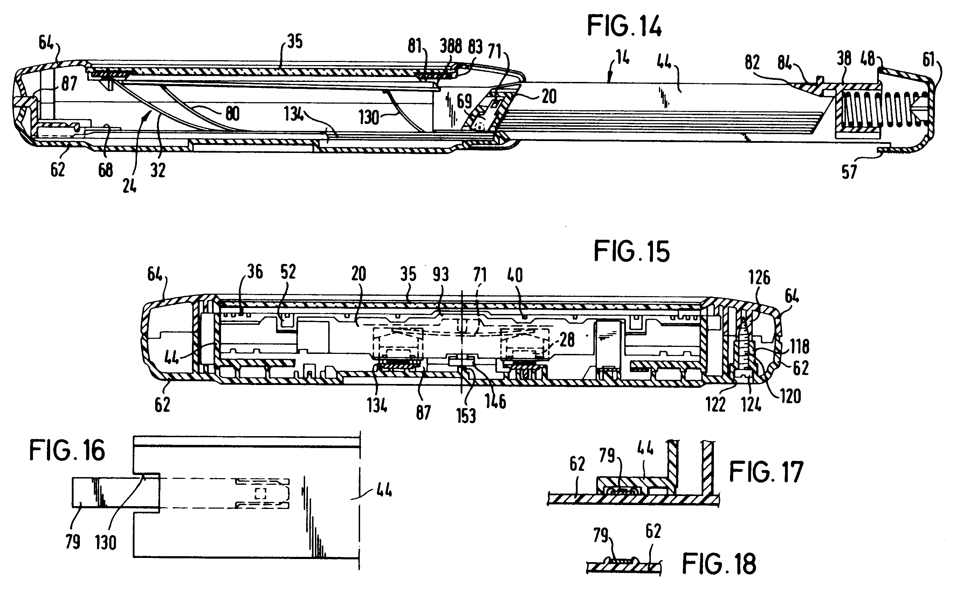

Fig. 14 einen Längsschnitt nach Linie 14-14 der Fig. 13,
Fig. 15 einen Querschnitt nach Linie 15-15 der Fig. 13,
Fig. 16 in Draufsicht, Fig. 17 und 18 im Schnitt ein Detail der Rahmenteile,

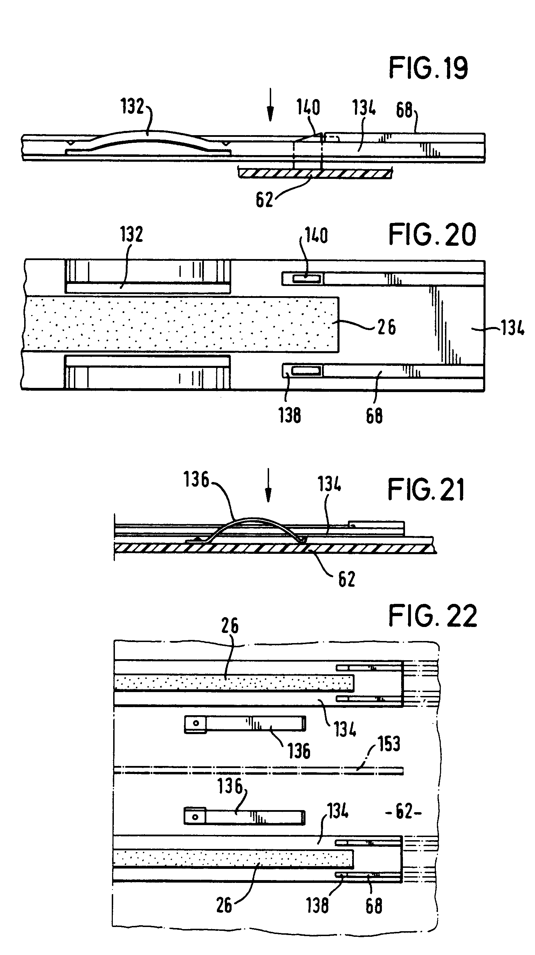

Fig. 19 im Längsschnitt, Fig. 20 in Draufsicht ein weiteres Detail,
Fig. 21 bzw. 22 analog zu Fig. 19 bzw. 20 eine alternative Ausbildung derselben Funktionsbaugruppe,

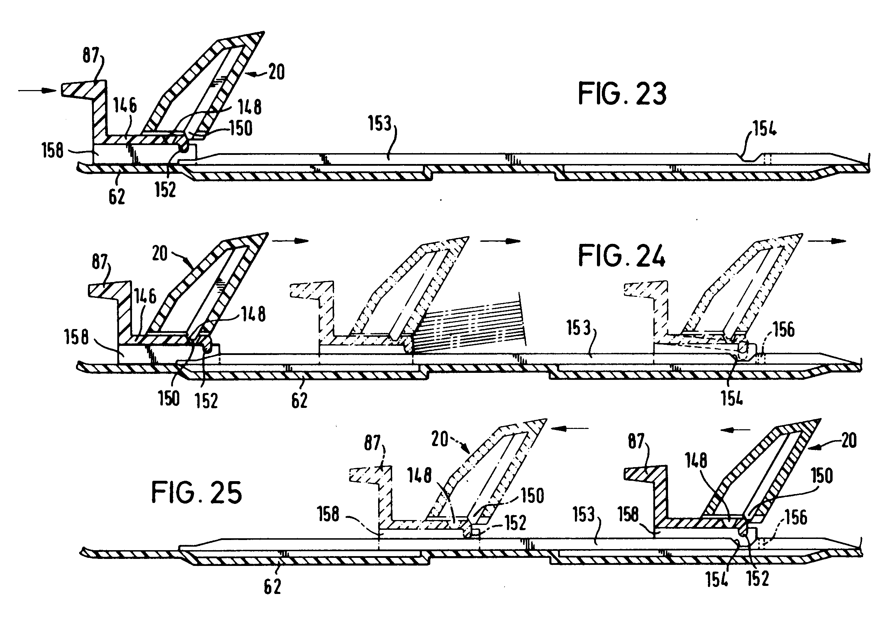

Fig. 23 bis 25 im vereinfachten Längsschnitt den Ablauf einer Sonderfunktion,

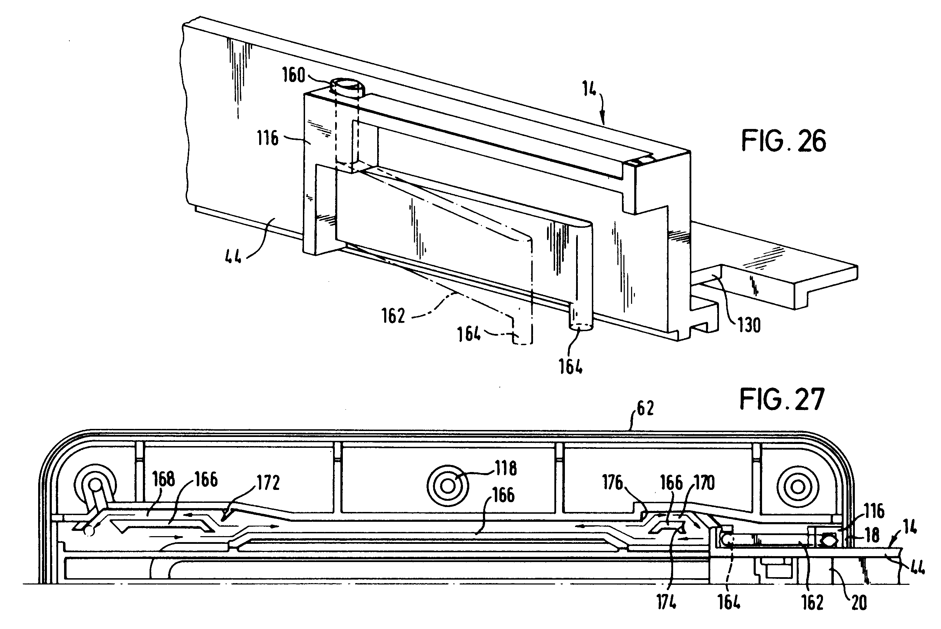

Fig. 26 in Perspektive, Fig. 27 in Teildraufsicht ein weiteres Detail der Vorrichtung,

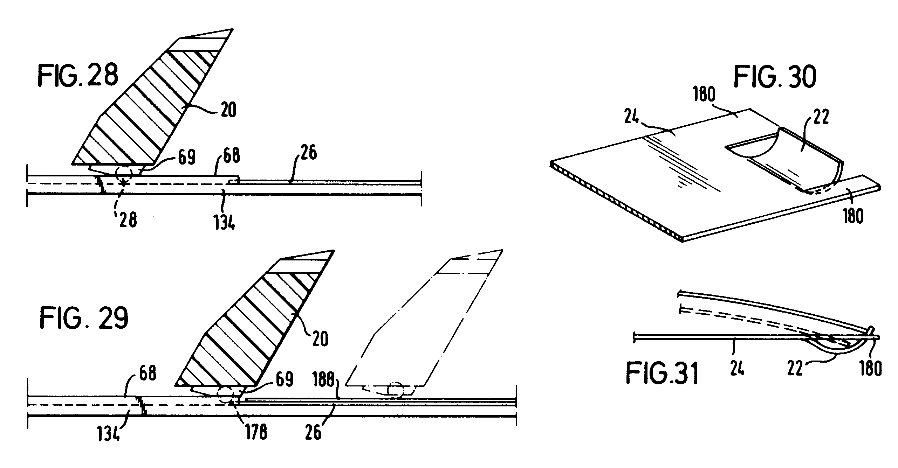

Fig. 28 und 29 weitgehend schematisiert ein weiteres Detail,
Fig. 30 in Teilperspektive, Fig. 31 in Seitenansicht ein weiteres Detail, und

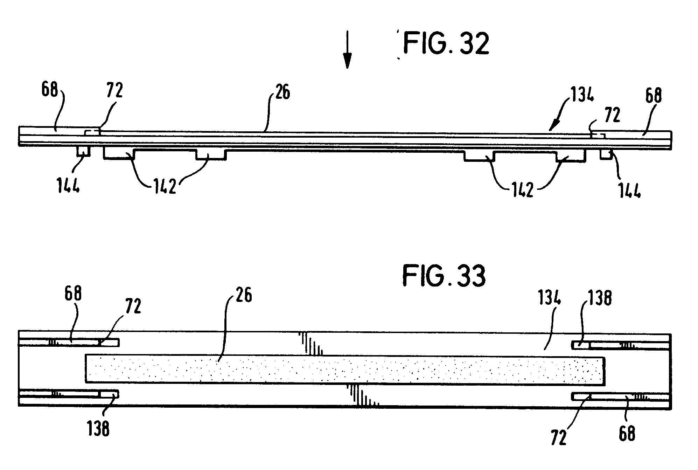

Fig. 32 in Seitenansicht, Fig. 33 in Draufsicht eine in das Gehäuse-Rahmenteil eingesetzte Baugruppe.

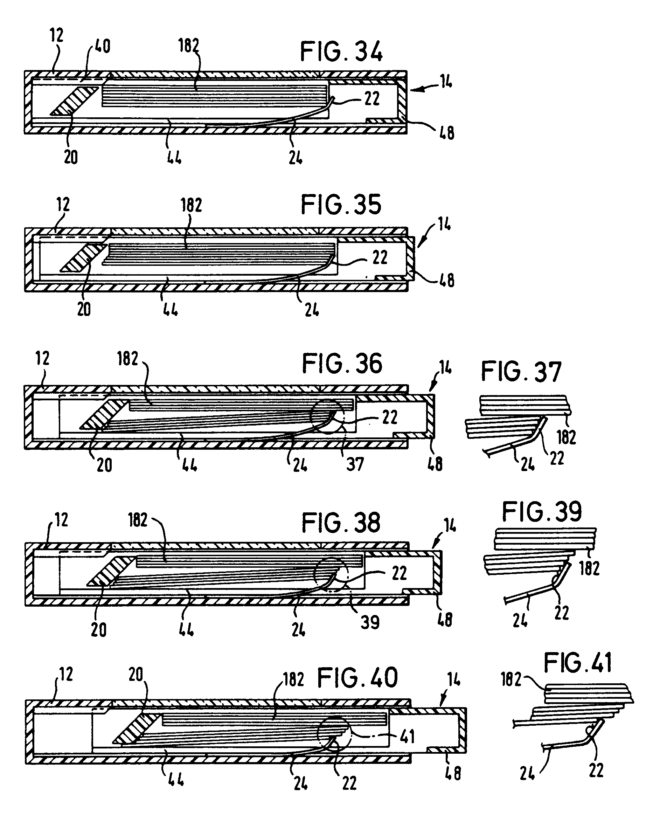

Die Fig. 34 bis 41 stellen schematisiert im Längsschnitt den Funktionsablauf der Zufuhr dar, wobei Fig. 37, 39 bzw. 41 jeweils einen vergrößerten Ausschnitt der danebenstehenden Figur zeigen.

In den folgenden Figuren werden entweder weitgehend schematisierte Darstellungen gezeigt oder aber Detailansichten, um Unterschiede zu verdeutlichen; bezüglich der jeweils nicht gezeigten Einzelheiten kann der Fachmann auf die ausführlich erläuterten Ausführungsbeispiele nach Fig. 1-10 bzw. 13-33 zurückgreifen.

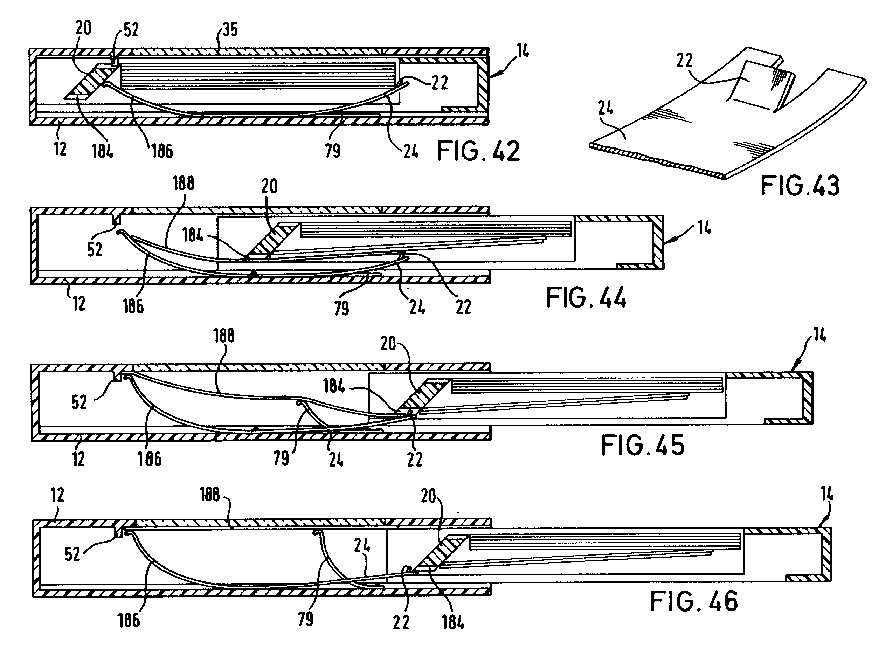

Fig. 42 bis 46 zeigen ein weiteres Ausführungsbeispiel, wobei Fig. 42 und 44 bis 46 den Ablauf des ersten Wechsel-Halbzyklus darstellen und Fig. 43 vergrößert den Mitnehmer zeigt.

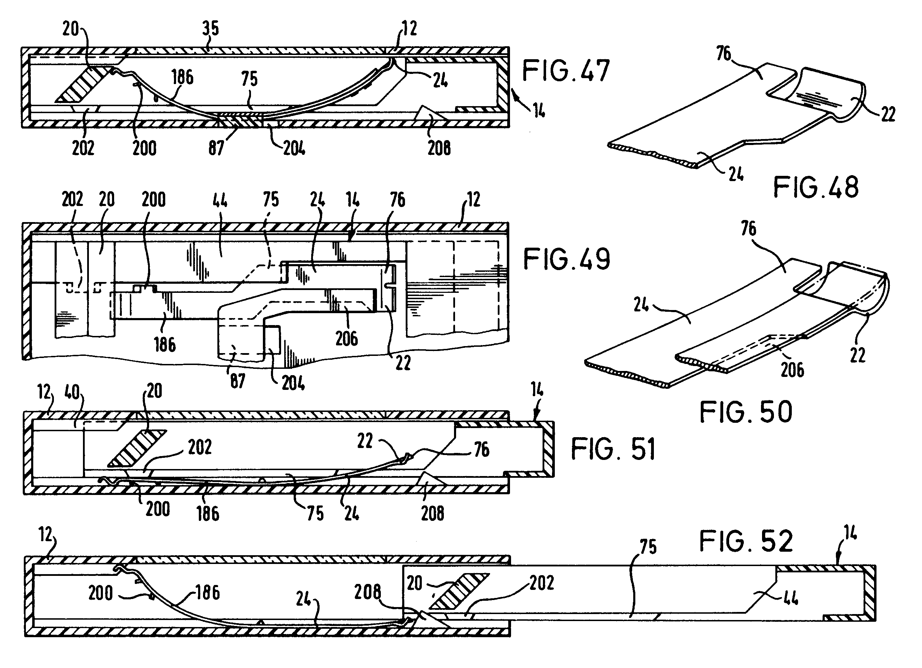

Fig. 47 bis 52 zeigen in ähnlicher Form wie Fig. 42 bis 46 ein weiteres Ausführungsbeispiel.

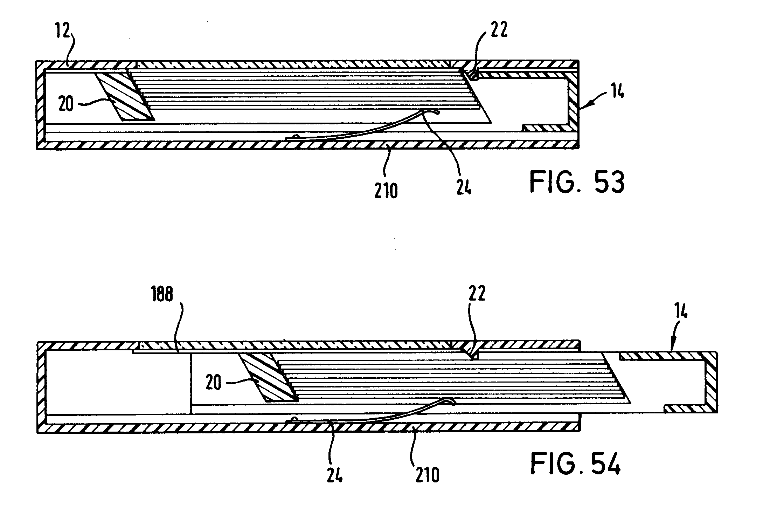

Fig. 53 bzw. 54 zeigen zeigen in zwei Funktionsstellungen in schematisierter Längsschnittdarstellung eine alternative Zufuhreinrichtung.

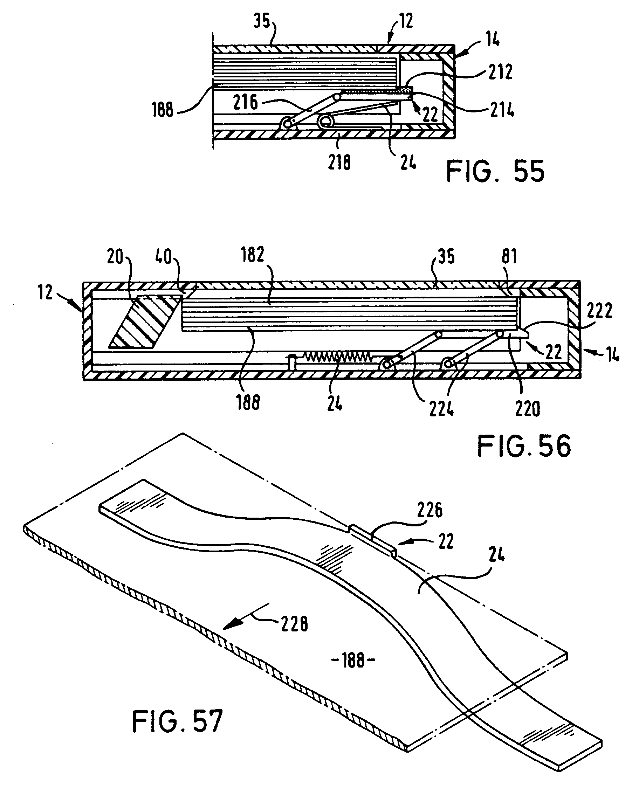

Fig. 55-57 stellen je eine weitere alternative Zufuhreinrichtung dar.

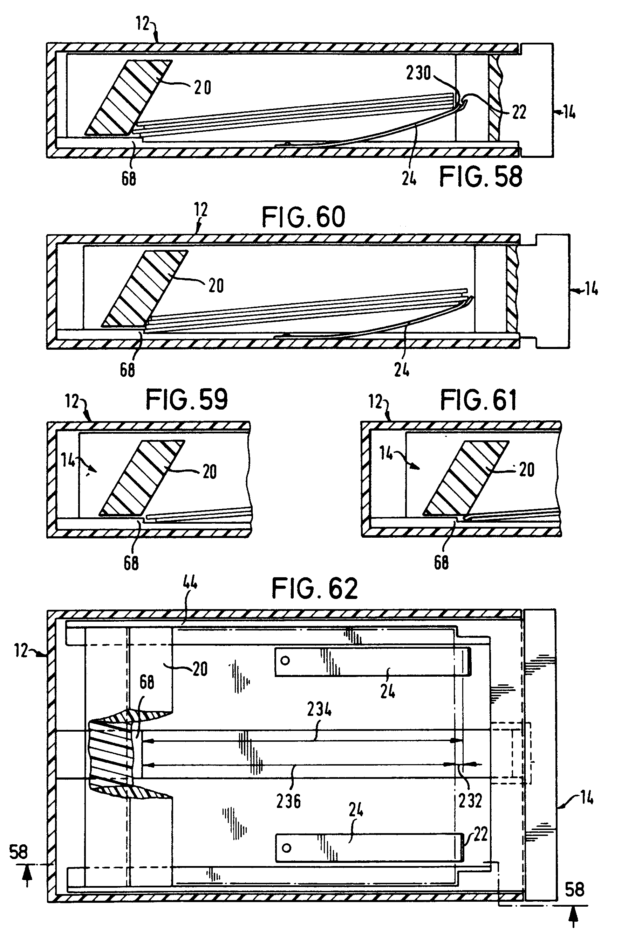

Fig. 58 bis 62 illustrieren schematisch, wie eine richtig funktionierende Zufuhreinrichtung trotz unterschiedlich langer Blätter oder Bilder ermöglicht wird.

Die dann folgenden Figuren illustrieren Alternativen zu den in den ersten beiden vollständig beschriebenen Ausführungsbeispielen vorgesehenen Funktionsbaugruppen, und zwar zeigen

Fig. 62 bis 78 alternative Trenneinrichtungen,

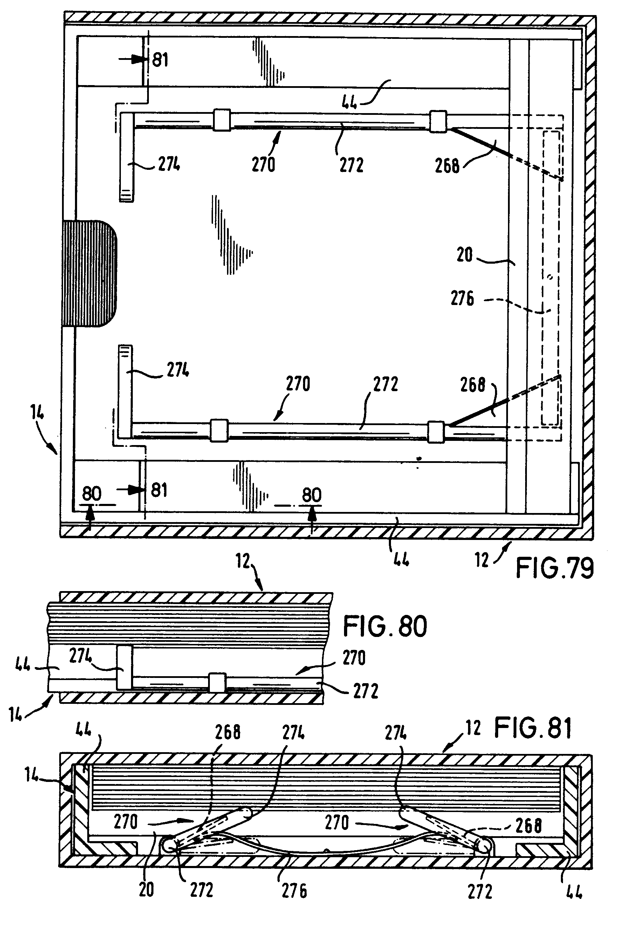

Fig. 79 bis 96 alternative Halteeinrichtungen,

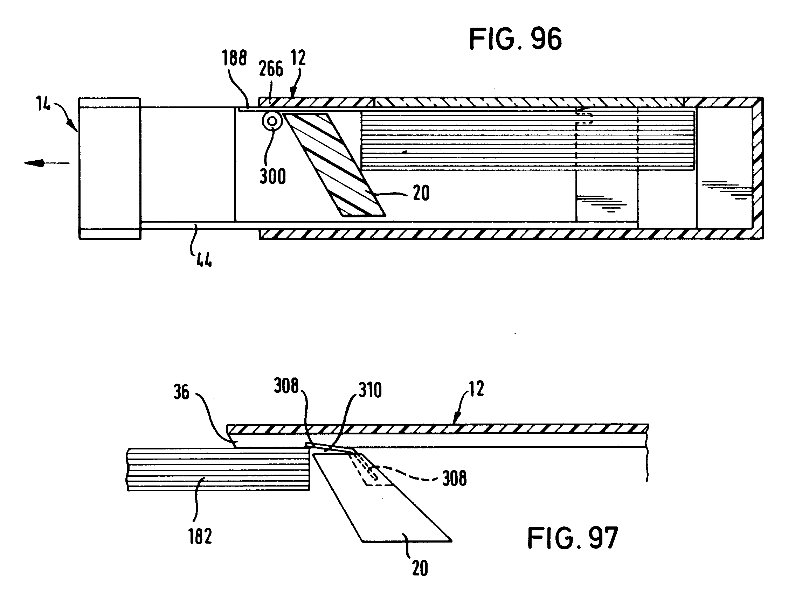

Fig. 97 bis 113 alternative Leiteinrichtungen.

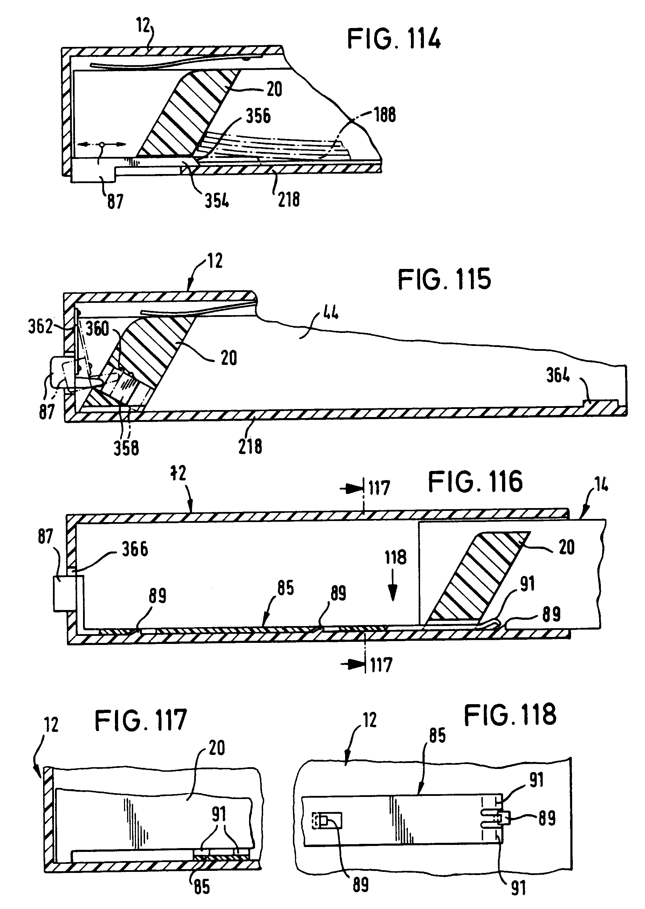

Die Figuren 114 bis 123 schließlich zeigen alternative Möglichkeiten, wie alle Blätter oder Bilder aus der Vorrichtung entnommen werden können.

Die Figuren 1 bis 10 beziehen sich auf ein erstes Ausführungsbeispiel, das nachstehend im Zusammenwirken aller Bauelemente detailliert beschrieben wird.

Fig. 1 zeigt in teilweise geschnittener Draufsicht eine Vorrichtung gemäß der Erfindung. Das erste Rahmenteil ist als Gehäuse 12 ausgebildet, das zweite Rahmenteil ist ein Schieber 14, der aus dem Gehäuse um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von einem Kontaktelement in Form von Haken 22 verkörpert, die an Blattfederarmen 24 sitzen. Die zweite Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28, die zusammen mit dem Haftbelag 26 eine erste Halteeinrichtung bilden, gehalten wird. Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers den Blattstapel (in Fig. 1 nicht gezeigt) gegen ein Sichtfenster, dessen innere Kontur mit 35 bezeichnet ist. Das dann im Stapel oberste Blatt, im Bestimmungsfalle ein Fotoabzug, soll dann möglichst plan liegen; zu diesem Zweck ist es an seinem Umfang in einer Ebene abgestützt, die definiert ist durch seitliche Rippen 36, die Unterseite eines Griffstück-Schiebeteils 38 und, auf der ihm gegenüberliegenden Seite, durch an das Gehäuse angeformte Rippen 40.

Fig. 1 zeigt die teilausgezogene Position des Schiebers 14. Im eingeschobenen Zustand liegt der Separatorsteg jenseits dieser Rippen 40; da er aber weiter zum Fenster 35 vorsteht, als dem Niveau dieser Rippen entspricht, weist er für den Vorbeigang derselben Einschnitte 42 auf.

Die Abstützung der Kanten des Stapels erfolgt seitlich (d.h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberpatte; die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen - die L-förmigen Querschnitt besitzen - verbindenden Stirnwand 61.

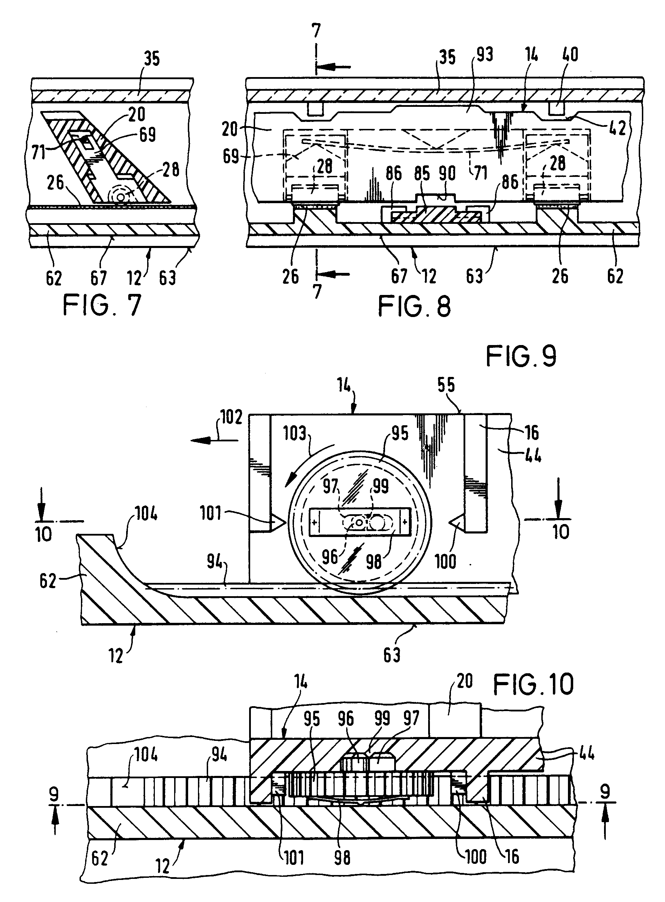

Das Gehäuse ist aus drei Teilen zusammengesetzt: Der Unterschale 62 mit Gehäuseboden 63, der rahmenartigen Oberschale 64 mit Fensterausschnitt, und dem in dieses eingesetzten Fenster 35. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen - also dem Separatorsteg abgewandten - Kanten der auf den Federarmenden liegenden Fotos greifen die Kontaktelemente (Haken) 22 an, wodurch eine gewisse Anzahl von Fotos - je nach der Höhe der Haken - der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

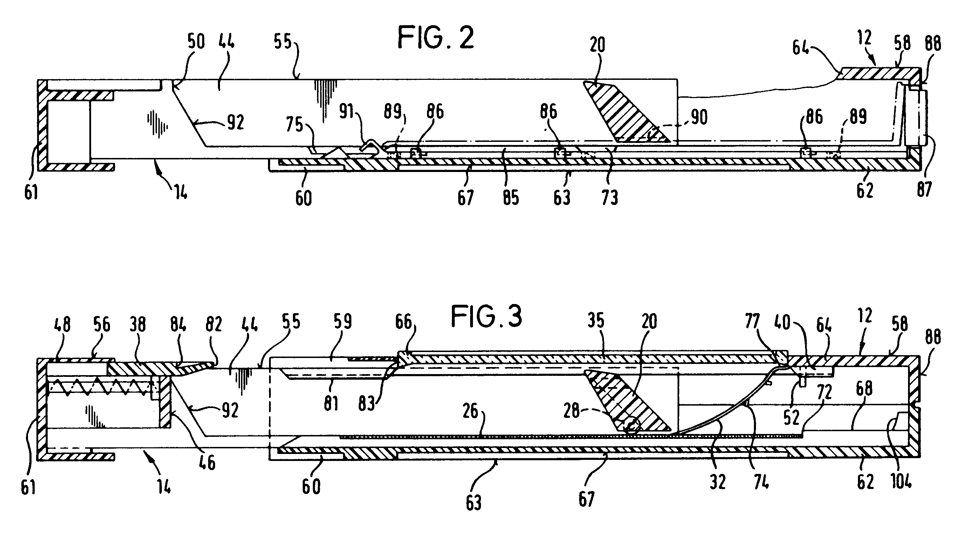

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Kontaktelemente 22 angreifen, längs der Schräge abwärts "wandern", in Richtung auf die ihnen zugekehrte Kante 72 der Stufen. Nur gerade die führende Kante eines einzigen Fotos hat zwischen den Schuhen 69 und dem Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen Fotos, deren Kanten die Kontaktelemente 22 berühren, stoßen an den Separator selbst oder an dessen Schuhe an mit der Folge, daß sie von den Kontaktelementen 22 abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse - also dem ersten Rahmenteil - festgehalten wird. Der Reststapel wird vom Separator zusammen mit dem Schieber nach außen mitgenommen, bis dieser ganz herausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

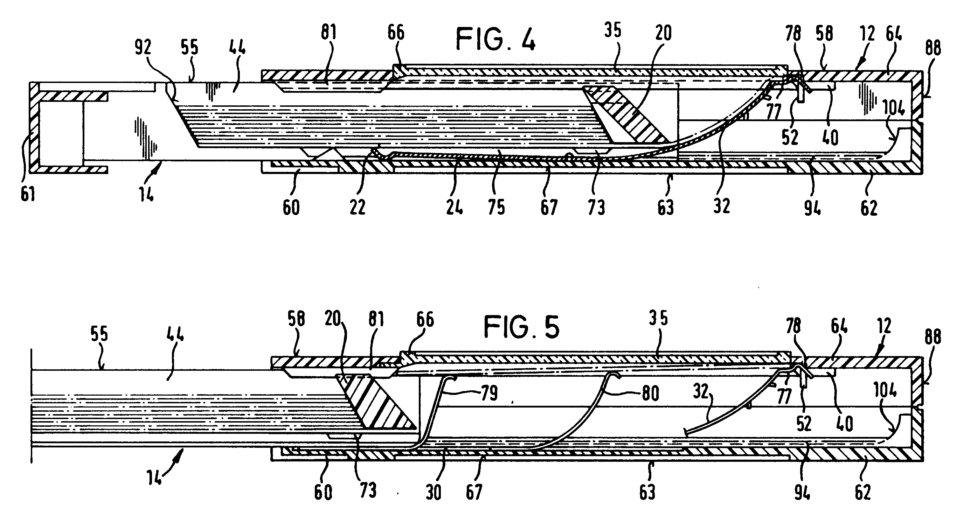

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen. Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in Fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Kontaktelemente 22, die beiden Schuhe 69, die Haftbeläge 26 und die Federarme 32 sind sämtlich jeweils symmetrisch bezüglich der Mittelebene der Gesamtvorrichtung angeordnet, und die beiden Kontaktelement 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung: Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten beschrieben worden ist, wird als ganzes in Richtung Fenster gehoben. Hierzu dienen die schon erwähnten Blattfedern 30 mit frontseitigen Armen 79 und rückseitigen Armen 80, die - wie in Fig. 5 deutlich erkennbar - das Einzelfoto so halten und abstützen, daß es beim Schieberrückhub wieder auf den Stapel gelangen kann. Im geschlossenen Zustand der Vorrichtung und während des Auszugshubes des Schiebers - zumindest während des ersten Teils desselben - sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenokken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Bei dem insoweit beschriebenen Vorgang bleibt immer das abgetrennte Foto im Gehäuse zurück. Es ist nicht oder nicht ohne weiteres möglich, dieses aus der Vorrichtung zu entnehmen. Um den Stapel, auch wenn dieser nur aus einem Bild besteht, entnehmen zu können, ist daher eine besondere Einrichtung vorgesehen.

Im Gehäuse ist eine Steuerbrücke 85 verschieblich aufgenommen, gehalten von an das Gehäuse angeformten Klammern 86. Die Brücke trägt einen Steuerknopf 87, der die Rückwand 88 des Gehäues durchsetzt und geringfügig über die Wechslerkontur vorsteht. Bei Fingerdruck auf den Knopf läuft die Brücke auf Keile 89 am Gehäuseboden auf und wird dadurch in Richtung Fenster gehoben. Die Breite der Brücke paßt gerade in einen entsprechenden Ausschnitt 90 im Separator und versperrt, auf dem gesamten Auszugshub des Schiebers, den Durchlaßspalt der Trenneinrichtung, so daß jedes in der Vorrichtung befindliche Bild mit dem Schieber heraustransportiert werden muß. Nahe der äußeren Endstellung des Schiebers überläuft dessen Separatorsteg eine hochstehende Nase 91 der Brücke, die nach unten ausfedert; wird der Schieber jetzt wieder eingeschoben, drückt der Separatorsteg zuerst die Brücke in ihre Ausgangsstellung zurück, ehe er unter erneuter Auslenkung der Nase 91 frei zurückführbar ist.

Wie oben erwähnt, sollen die Fotos durch die geschilderten Mittel im Abstand von der Fensterscheibe gehalten werden, damit diese bei den Wechselvorgängen nicht in Berührung mit der Bildoberfläche gelangt, wodurch Kratzschäden auftreten würden. Die Gefahr besteht jedoch gleichwohl, weil die Fotos nicht (immer) eben sind, sondern in aller Regel eine Wölbung entweder in Längs- oder in Querrichtung aufweisen. Bei Wölbung in Längsrichtung genügen die auf dem gesamten Auszugshub wirksamen Rippen 36. Im anderen Falle hingegen ist zwar das Griffstück-Schiebeteil wirksam, doch der gegenüberliegende Abschnitt des Separatorsteges wäre kaum in der Lage, die erheblichen Spannungen aufzunehmen, die in einem dickeren Stapel gleichartig gewölbter Fotos entstehen.

Deshalb sind zusätzlich folgende Maßnahmen getroffen:

Unterhalb der Anschlagflächen 50 weist die Schieberfrontwand nahe den Holmen Schrägflächen 92 auf, die im wesentlichen parallel der gegenüberliegenden Separatorschräge sind. Die Fotos liegen also schräg gestaffelt zwischen Separator und Schrägflächen, wodurch ein Großteil der Spannungen im Stapel auf die Gesamtfläche des Separators verteilt wird. Außerdem ist in der Mitte des Separatorsteges eine Erhöhung 93 vorgesehen, die die Restspannung derjenigen Fotos aufnimmt, die an den zu ihrer Kante senkrechten Anschlagflächen 50 abgestützt sind.

Wenn der Benutzer einmal begonnen hat, die Wechselbewegung durchzuführen, so muß diese ganz zuende gebracht werden, um die Vorrichtung in die Ausgangsposition zu bringen. Man kann also nicht den Schieber halb herausziehen und dann wieder einstoßen.

Dies wird durch einen Mechanismus bewirkt, der in den Figuren 9 und 10 im Detail dargestellt ist. An das Gehäuse ist eine Zahnstange 94 angespritzt, mit der ein Zahnrad 95 kämmt, welches einstückig mit seiner Welle 96 ausgebildet ist. Die Welle sitzt in einem zur Zahnstange parallelen Langloch 97 im Schieberholm 44, in das es mittels eines sich am Gehäuse abstützenden Blattfederchens 98, angespritzt am Zahnrad, eingedrückt gehalten wird.

Das Langloch ist durch eine Rippe 99 in zwei Teile unterteilt, in denen die Welle 96 nur noch wenig seitliches Spiel hat. Schließlich sind beidseits des Langlochs an den Schieber Sperrnasen 100, 101 angeformt, die in der Ebene des Zahnkranzes des Zahnrads liegen und mit ihren Spitzen in diesen eingreifen können.

Dieser Mechanismus arbeitet wie folgt:

Es sei angenommen, daß das Zahnrad die in Fig. 9 dargestellte Position hat und daß bei der Schieberbewegung in Richtung des Pfeils 102 das Zahnrad sich in Richtung des Pfeiles 103 dreht. Durch die Reibung des Federchens 98 an der Gehäusewandung wird dabei das Zahnrad nahe der Mitte des Langlochs, mit seiner Welle anliegend an der Rippe 99, gehalten. Dabei ergibt sich ein, wenn auch geringer, Abstand zwischen dem Kopfkreis des Zahnkranzes und der Spitze der Nase 101. Versucht man nun, den Schieber in Gegenrichtung zu bewegen, wird das Zahnrad an das äußere Ende des Langlochs verlagert und sofort von Spitze 101 gesperrt. Am Ende des Schieberhubs hingegen läuft der Zahnkranz auf einen Anschlag-Teilkreis 104 auf und wird unter Deformation des Federchens 98 über die Rippe 99 gehoben, wodurch nun nur die Drehung in der entgegengesetzten Richtung freigegeben ist.

Es ist wichtig anzumerken, daß zwar auf dem größten Teil des Schieberauszugshubes die erste Halteeinrichtung von den, Rollen 28 im Zusammenwirken mit den Haftbelägen 26 verkörpert wird, daß aber auf dem letzten Teil des Hubes, kurz vor Erreichen der Endposition, auch die Federarme 32, indem sie das Einzelfoto festklammern, als "Fortsetzung" der Halteeinrichtung wirken.

Wie aus der vorhergehenden Erläuterung entnehmbar ist, wird jedes umgeschichtete Blatt während des gesamten Umschichtzyklus niemals freigegeben, sondern an mindestens zwei Punkten erfaßt und damit gegen Verdrehung gesichert. Es ist somit stets unter Kontrolle, hier mit achssymmetrischen Mitteln.

Die stapelparallelen Schenkel der Schieberholme, auf denen sich beim Umschichten das vereinzelte Blatt abstützt, dürfen voneinander höchstens einen solchen Abstand haben, daß ein kurzes Foto, das mit einer Kante gerade an einem dazu senkrechten Holmschenkel anliegt, von dem gegenüberliegenden Holm an der anderen Kante noch gehalten wird.

Wie oben erwähnt, hat die Vorrichtung das Sichtfenster in der Oberschale des Gehäuses. Die Abmessung des Fensters ist dann in Richtung quer zur Bewegungsrichtung höchstens so groß, daß das kürzestmögliche Foto, auch wenn es außermittig liegt, sich nicht mit seiner Kante im Sichtfeld präsentiert. Entsprechendes gilt für die Rippen 36, und ganz dieselben Überlegungen treffen auch zu auf die Federarme 79 und 80 und überhaupt für alle an den Blattflächen angreifenden Bauteile.

Die oben beschriebene und dargestellte Ausbildung des Federsystems, gebildet von den einstückig geschnittenen und paarweise symmetrisch angeordneten Federn mit den Federarmen 24 und 32, erfüllt insgesamt fünf Funktionen. Erstens bilden die an ihnen angeformten Haken 22 die Kontaktelemente der Zufuhreinrichtung, wobei die Haken letztlich nur ein Blatt in die Trenneinrichtung mitnehmen. Zweitens bilden beide Arme gemeinsam - genauer gesagt, die vier Arme beider Federn - ein Andrucksystem, mit dem der Stapel bei ruhender Vorrichtung sauber gegen das Fenster gedrückt oder vorgespannt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug neben den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

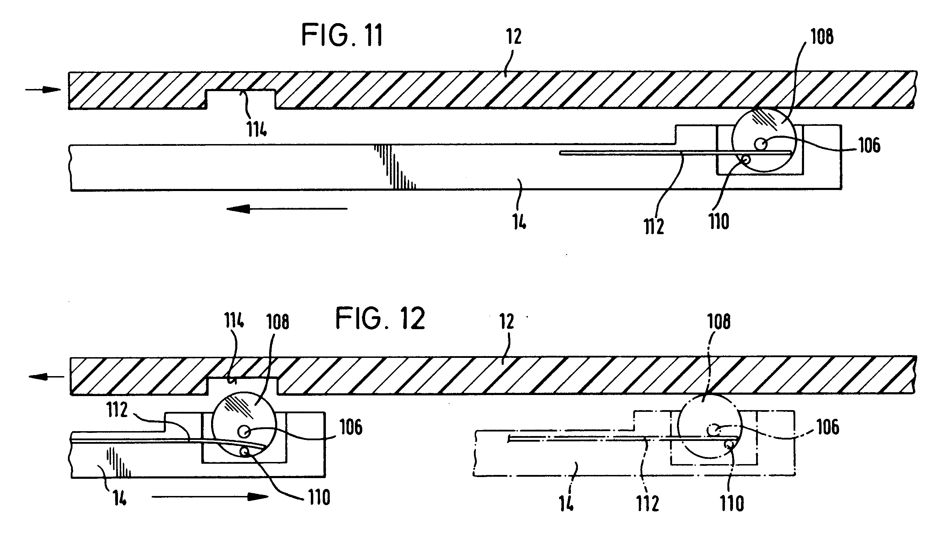

Die Fig. 11 und 12 zeigen eine Variante der Sperreinrichtung nach Fig. 9 und 10. Von den Rahmenteilen sind jeweils nur einander gegenüberstehnde Abschnitte 12 bzw. 14 angedeutet. In einem der Rahmenteile, hier Rahmenteil 14, ist um einen Zapfen 106, der jedoch exzentrisch sitzt, eine Klemmrolle 108 drehbar. Sie trägt gegenüber ihrer größten Ausladung einen Stift 110, über den eine am Rahmenteil 14 befestigte Blattfeder 112 greift. Bei Bewegung in Pfeilrichtung in Fig. 11 kann die Klemmrolle ausweichen, in Gegenrichtung jedoch verklemmt sie die beiden Rahmenteile. In den Endlagen der Rahmenteile trifft die Klemmrolle auf eine Ausnehmung 114 im jeweils anderen Rahmenteil und kann deshalb, bei Schubrichtungsumkehr, frei um etwa 90° schwenken, bis der Stift 110 wieder an der Feder 112 anliegt.

Die oben beschriebenen beiden Sperrvorrichtungen wirken nach Art eines Freilaufs, das heißt, sie schalten jeweils erst in den Endstellungen beider Rahmenteile relativ zueinander um. Es kann aber vorkommen, daß ein Benutzer eine Fehlbedienung wieder rückgängig machen möchte, etwa weil ein Stapel Fotoabzüge beim Einlegen sich verlagert hat. Dann ist es doch erwünscht, wenigstens aus gewissen Positionen heraus ungesperrt in beiden Richtungen die Rahmenteile relativ zueinander verlagern zu können. Deshalb ist im nachstehend beschriebenen bevorzugten Ausführungsbeispiel eine andere Bauart der Sperrvorrichtung vorgesehen.

In Fig. 13 bis 15 ist die Ausführungsform in ihrer Gesamtheit dargestellt. Im Gehäuse 12 ist der Schieber 14 verschieblich aufgenommen; Gehäuse 12 bildet das erste Rahmenteil, Schieber 14 das zweite. Der Auszugshub ist durch ein an einen der Schieberholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte 120 sowie außenseitige Einsenkungen 122 für Schraubenköpfe 124 auf, während die Oberschale dazu koaxial angeformte Kernloch-Hülsen 126 trägt, in die die Schrauben ihr Gewinde selbst schneiden. In die Oberschale 64 ist das Fenster 35 eingeklipst, und die unter seinen äußeren Randbereichen liegenden Teile der Oberschale sind dadurch nicht sichtbar, daß diese Bereiche des Fensters mattiert sind. In Fig. 13 ist die Kontur des mittleren, transparenten Fensterabschnitts mit 34 markiert.

Funktionell bestehen wenig Unterschiede gegenüber dem Ausführungsbeispiel nach Fig. 1 bis 10, so daß es genügt, nur die markanten Abweichungen zu erläutern.

Hier sind die Federarme 24, 32 und 80 zu einem Stanz- und Biegeteil zusammengefaßt und mittels Nocken 128 positioniert und kalt festgebördelt. Dagegen sind die Federarme 79 gesonderte Bauteile, die wie in Fig. 16 bis 18 dargestellt, mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 80 gewährleistet, die die dem Schieber abgewandte Endkante des Bildes klammerartig nach oben drücken.

Der Haftbelag 26 kann unter Umständen das vereinzelte Bild so sehr festhalten, daß die Kraft der Federarme 79 nicht ausreicht, um die dem Schieber zugewandte Bildkante zu heben. Die Fig. 19 und 20 zeigen eine erste Möglichkeit, diese Kante zusätzlich vom Haftbelag abzudrücken: Die, beiden Haftbelagstreifen sind auf je einem gesondert gefertigten Steg 134 in Form einer Schiene angeordnet. Beidseits des Streifens 26 weist der Steg angeformte Federbrücken 132 auf, die nach Überlaufen durch den Separatorsteg 20 nach oben ausfedern und die Bildkante liften. Alternativ kann man - wie in Fig. 21 und 22 gezeigt - gesonderte metallische Federblätter 136 vorsehen.

Die Gestaltung der Stege 134 läßt sich Fig. 32 und 33 entnehmen. Man erkennt, daß sie spiegelsymmetrisch gestaltet sind, also an beiden Enden Stufen 68 mit Kanten 72 aufweisen. Der Grund liegt darin, daß dann beim automatischen Beschichten der Stege mit dem Haftbelag kein Sortieren erforderlich ist. Allerdings sind dann zusätzlich Löcher 138 vorzusehen, durch die am griffseitigen Ende des Gehäuses an dessen Unterschale angeformte Auffahrkeile 140 für den Separatorsteg ragen. Die Befestigung der Stege in der Unterschale erfolgt durch Eindrücken der Nasen 142 in entsprechende Rinnen der Gehäuseunterschale, und die genaue Positionierung erfolgt mittels eines der beiden Zapfen 144, nämlich mittels des dem Schiebergriff abgewandten Zapfens, während dem anderen Zapfen ein gehäuseseitiges Langloch zugeordnet ist.

Die Stege 134 bilden zugleich die Führung für die in der Symmetrieebene angeordnete Taste 87, deren Gestaltung, Anordnung und Funktion schematisch in Fig. 23 bis 25 dargestellt ist. Fig. 23 zeigt die Betriebsposition, das heißt in dieser Position der Taste 87 erfolgt der normale Wechselvorgang. Die Taste 87 trägt einen auf den Separatorsteg 20 hin gerichteten Fortsatz 146 mit einer Kerbe 148, zu der komplementär ein Doppelkeil 150 an der Unterseite des Separatorsteges 20 ist. Drückt man nun bei festgehaltenem Schieber auf die Taste 87, so federt ihr Fortsatz 146 nach unten aus, bis der Doppelkeil 150 in die Kerbe 148 einrastet (Fig. 24, links). Die vom Fortsatz 146 nach unten ragende Sperrnase 152 blockiert nun die Trenneinrichtung für die Kante des untersten Bildes im Stapel, so daß bei Zug am Schieber die Kontaktelemente 22 auch von der Kante dieses Bildes abgleiten, wenn der Separatorsteg zusammen mit der Taste 87 auf die ihm zugewandte Stapelkante einwirkt und den Stapel mitnimmt (Fig. 24, Mitte). Hierbei verhindert eine Rippe 153 ein Ausrasten des Fortsatzes 146, der auf der Rippe 153 entlangläuft. Nahe der äußeren Endposition des Schiebers 14 trifft die Sperrnase 152 auf einen Einschnitt 154 in der Rippe 159, während die Tastenführungslappen 158 auf einen Anschlag 156 auflaufen. Der Fortsatz kann demgemäß nach unten ausfedern, wenn der Schieber weitergezogen wird, und sich so vom Separator lösen (Fig. 24, rechts). Beim Wiedereinschub des Schiebers 14 ist die Taste lose beweglich, so daß der Doppelkeil sie einfach vor sich her schiebt, bis sie ihre Endposition wieder erreicht hat (Fig. 25).

Oben wurden unter Bezugnahme auf Fig. 9 bis 12 zwei Bauarten von Richtungswechsel-Sperren beschrieben. Beim vorliegenden Ausführungsbeispiel sind ebenfalls Sperren vorgesehen, die jedoch nur in den "kritischen" Phasen des Wechselzyklus wirken.

Im Lagerauge 116 des Schiebers 14 ist um einen Zapfen 160 schwenkbar eine Steuerklinke 162 angeordnet, die mit einem Steuernocken 164 längs Kanälen geführt ist, die durch an die Unterschale 62 angeformte Führungsschienen 166 definiert sind, so daß der Steuernocken 164 den in Fig. 27 mit Pfeilen markierten Pfaden beim Einschub bzw. beim Auszug folgen muß. Während des größten Teils des Wechselzyklus kann man ungehindert die Bewegungsrichtung umkehren, nicht jedoch dann, wenn sich der Steuernocken 164 während des Einschubs im Kanalabschnitt 168 bzw. während des Auszugs im Kanalabschnitt 170 befindet. Im ersteren Falle würde, wenn man kurz vor der inneren Endstellung des Schiebers diesen wieder herausziehen will, der Steuernocken auf den Anschlag 172 auflaufen; im letzteren Falle, wenn also kurz vor Erreichen der äußeren Endstellung der Schieber wieder eingeschoben wird, stößt der Steuernocken entweder auf den Anschlag 174 oder auf die Anschlagkante 176. Es ist anzumerken, daß der Zapfen 160 mit hinreichender Reibung im Lagerauge sitzt, daß die Steuerklinke zwar den Führungsstegen ohne merkbare Behinderung folgen, nicht aber frei pendeln kann.

Fig. 28 und 29 lassen die Gestaltung der zusammenwirkenden Teile des Separatorsteges und der Haftbelag-Stege 134 erkennen. In der Ruheposition (Fig. 28), also bei ganz eingeschobenem Schieber 14, sitzen die Schuhe 69 auf den Stegen seitlich auf, während die Andruckrollen 28 in eine Ausnehmung hinter dem Haftbelag ragen, so daß ihre Lager entlastet sind und keine Deformation durch Kaltfluß eintreten kann. Bei Beginn des Wechselzyklus (Fig. 29) laufen die Rollen dann erst auf eine Stufe 178 auf und werden damit auf das Niveau der vor dem Haftbelag 26 liegenden Flächen gehoben, während die Schuhe sich auf dem Niveau der Stufe 68 befinden. Die Niveaudifferenz zwischen 68 und 178 ist funktionsbedeutsam, weil sie auf die Bilderdicke abgestimmt ist; beide Niveaus befinden sich an demselben Spritzgußteil, so daß die Toleranz extrem klein ist. Der Auflauf der Rollen 28 auf die Bildkante ist problemlos.

Fig. 30 zeigt das Ende des Federarms 24 mit dem Kontaktelement 22. Beidseits desselben erstrecken sich noch Fortsätze 180, die die Aufgabe haben, sich an das Bild von unten anzulegen und damit zu verhindern, daß die in Fig. 31 gestrichelt dargestellte Situation eintreten kann, daß nämlich ein stark gekrümmtes Bild sich so tief in den Haken 22 setzt, daß dieser von der Kante nicht mehr abrutschen kann. Diese Möglichkeit muß aber gegeben sein, damit der Gesamtstapel mittels der Taste 87 entnommen werden kann.

Die Fig. 34 bis 57 zeigen die Wirkungsweise der Zufuhreinrichtung, Alternativen und Details derselben.

Fig. 34 bis 41 stellen zunächst das Prinzip dar. Man erkennt in Fig. 34 das erste Rahmenteil in Form des im wesentlichen rechteckigen Gehäuses 12, in dem gleitbeweglich der Schieber 14 als zweites Rahmenteil aufgenommen ist. Die Trenneinrichtung ist nur symbolisch als Separatorsteg 20 angedeutet. Der Stapel gleichformatiger Blätter ist mit 182 bezeichnet.

Der Schieber 14 umfaßt ein Griffstück 48, an dem die in Bewegungsrichtung vordere Kante des Stapels anliegt, sowie neben dem Separatorsteg die zwei Längsholme 44. Zwischen den Längsholmen ragen vom Boden des Gehäuses 12 die Elemente der Zufuhreinrichtung nach oben. Die zwei Blattfedern 24 sind mit einem Ende am Gehäuse festgelegt; das andere Ende weist die an der Stapelkante anliegende Schrägfläche des Kontaktelements 22 auf (siehe auch Fig. 37, 41). Demgemäß ist in den Federn 24 die Schrägfläche mit der Vorspannfeder baulich vereinigt.

Wird nun der Schieber aus dem Gehäuse herausgezogen, was in Fig. 34 bis 41 für den Beginn des Wechselzyklus dargestellt ist, so legt sich zunächst die Schrägfläche, welche im Ruhezustand nach Fig. 34 noch in den Bereich des Griffstücks 48 hineinragt, an die Stapelkante an (Fig. 35). Beim weiteren Herausziehen des Schiebers aus dem Gehäuse gehen die im Stapel obersten Blätter, die deshalb als Block gezeichnet sind, mit dem Schieber mit, während die im Einwirkbereich der Schrägfläche liegenden Blätter gebremst werden, bis der Separatorsteg 20 auf ihre gegenüberliegende Kante auftrifft (Fig. 36).

Auf die Blätter wird nun von beiden Kanten her einwärts wirkend ein Druck ausgeübt, einerseits von dem Separatorsteg, andererseits von der Schrägfläche der Zufuhreinrichtung. Die Schrägfläche kann aber nach unten ausweichen infolge der Elastizität der Federn 24, wobei die Schrägfläche an den Kanten der über dem untersten Blatt liegenden Blätter nacheinander abgleitet. Auf das unterste Blatt hingegen wirkt vom Separatorsteg her keine oder nur eine wesentlich geringere Bremskraft, so daß bei richtiger Abstimmung der Schräglage des Kontaktelements 22 und der Vorspannung der Federn 24 die von der in Blattlängsrichtung wirkenden Komponente der Federvorspannung aufgebrachte Kraft genügt, das unterste Blatt unter dem Separatorsteg durchzuschieben. Dabei wird auch die zwischen benachbarten Blättern wirkende Haftkraft überwunden, die bei der Auslegung des Systems eine erhebliche Rolle spielt.

Fig. 42 bis 46 zeigen weitgehend schematisiert eine Ausführungsform, bei der die Zufuhreinrichtung nicht nur diese Aufgabe übernimmt, sondern darüber hinaus auch noch das vom Reststapel getrennte Blatt mit dem ersten Rahmenteil verbindet, also eine Komponente der ersten Halteeinrichtung darstellt.

Die Rahmenteile 12 und 14 entsprechen weitgehend dem Aufbau gemäß Fig. 34 bis 41. Unterschiedlich ist, daß auf der dem Gehäuseboden zugewandten Seite des Separatorsteges 20 Einschnitte 184 vorgesehen sind, die den Durchtritt eines am freien Ende der Blattfedern 24 angeformten Kontaktelements 22 ermöglichen. Dieses weist die Schrägfläche auf seiner dem Stapel zugewandten Seite auf, während die Federabschnitte beidseits von ihm für eine symmetrische Abstützung sorgen. Die Federn 24 haben ein rückwärts gewandtes zweites freies Ende 186 mit abgerundetem Ende, und am Schieberboden, jedoch unter den Holmen des Schiebers, sind die beiden seitlichen Hilfsfedern 79 vorgesehen.

Diese Ausführungsform arbeitet wie folgt:

Beim Auszug des Schiebers wird das unterste Blatt dem Separatorsteg 20 ganz ebenso präsentiert wie bei der Ausführungsform nach Fig. 34 bis 41. Zugleich werden die Federenden 186 vom Separatorsteg nach unten gedrückt. Nachdem sie vom Separatorsteg überlaufen worden sind, können sie sich wieder entspannen und heben dabei das unter dem Separatorsteg durchgeschobene Blatt mit dessen hinterer Kante an. Dieses Blatt ist mit 188 bezeichnet. Der Auszugshub des Schiebers ist so bemessen, daß die Federenden neben den Kontaktelementen 22 noch von dem Separatorsteg unterdrückt gehalten sind, während die Holme die Hilfsfedern 79 freigeben, so daß diese auch die vordere Kante des Blattes anheben können, da diese von dem Kontaktelement 22 bis vor den Separatorsteg mitgenommen worden ist (vgl. Fig. 46); dabei kann diese Kante zwischen den Schieberholmen angehoben werden und beim Rückschub des Schiebers über den Separatorsteg hinweggleiten, wobei sich die andere Kante des Blattes an dem Anschlagsteg 52 abstützt.

Fig. 47 bis 52 stellen eine weitere Variante dar.

Das Kontaktelement aus Fig. 48 entspricht hinsichtlich der Wirkungsweise der Ausführungsform nach Fig. 43, wobei jedoch die Fertigung aus federhartem Stahl ermöglicht ist, weil die scharfe Abwinkelung vermieden wurde. Auch hier ist die Kontaktelement - Schrägfläche zugleich Teil der Halteeinrichtung für das vereinzelte Blatt. - Hier wird das freie Ende der Blattfeder 24 am Ende des Auszugshubes nicht vom Separatorsteg niedergedrückt, sondern von an die Schieberholme 44 angeformten, von der Seite her nach innen einspringenden Kufen 75, welche auf die Bereiche 76 der Blattfedern auflaufen. - An den anderen freien Enden der Blattfedern sind seitlich ausladende Ansätze 200 vorgesehen, auf die eine noch weiter innen sitzende kleine Hilfskufe 202 aufläuft, wenn gerade das unterste Blatt präsentiert wird, damit die auf dieses beim Durchschub wirkende Bremskraft vermindert wird.

Im Boden des Gehäuses ist eine Ausnehmung 204 vorgesehen, in der eine Taste 87 um eine kleine Strecke gleitverschieblich ist. Diese Taste trägt ein gabelförmiges Stanzteil 206, von dem in Fig. 49 nur eine Hälfte dargestellt ist. In der Ruheposition, wie gezeichnet, hat dieses Element keine Funktion. Verlagert man aber mittels der Taste das Stanzteil nach rechts in Fig. 47, 49 und 50, so wird das freie Blattfederende mit dem angeformten Kontaktelement 22 überbrückt, so daß keine Zufuhr zum Separator 20 mehr stattfindet, wenn am Schieber gezogen wird, so daß jetzt der Separatorsteg alle Blätter nach außen transportiert.

In den zuletzt beschriebenen Ausführungsbeispielen ist anzumerken, daß die Blattfedern 24 nicht nur die beschriebenen Funktionen ausführen, sondern darüber hinaus auch noch als Andruckanordnung wirken, mit denen - falls es sich zum Beispiel um Fotoabzüge handelt - das im Stapel oberste Foto an eine im Gehäuse vorgesehene Sichtscheibe angepreßt wird.

Man erkennt in Fig. 47 bis 52 noch an den Gehäuseboden angeformte Nasen 208, die gewissermaßen als Schutzwall vor den freien Enden der Blattfedern 24 mit den Kontaktelementen 22 liegen, damit beim Auswechseln eines Blattstapels nicht versehentlich ein oder mehrere Blätter unter diese Abkröpfungen geschoben werden können.

Fig. 53 und 54 stellen schematisch dar, daß die erfindungsgemäße Ausgestaltung auch nach dem Prinzip der kinematischen Umkehr so arbeiten kann, daß des Kontaktelement 22 starr an dem ersten Rahmenteil - hier in Form eines Gehäuses - vorgesehen, zum Beispiel angespritzt ist, während die Federvorspannung durch eine an die gegenüberliegende Wandung 210 angeheftete Blattfeder 24 bewirkt wird. Fig. 53 zeigt den Ruhezustand, Fig. 54 den Beginn des Auszugshubes des anderen Rahmenteils in Form eines Schiebers, wobei das Einzelblatt 188 bereits abgetrennt ist.

Schließlich ist anzumerken, daß in den beschriebenen Ausführungsformen eine Wechselwirkung zwischen der mit dickerem Stapel zunehmenden Vorspannung der Blattfedern und der dabei sich ändernden Neigung der Schrägfläche derart besteht, daß von der Trenneinrichtung aus gesehen im wesentlichen gleiche Verhältnisse unabhängig von der Stapeldicke vorliegen, d.h. die auf das unterste Blatt wirkende Bremskraft im wesentlichen unabhängig von der Zahl der Blätter im Stapel ist.

Es besteht auch die Möglichkeit, beim Zusammenschieben der beiden Rahmenteile bereits den nächsten Wechsel dadurch vorzubereiten, das Kontaktelement über ein Gestänge bewegt einen Vorlauf ausführt und dadurch bereits der Trenneinrichtung das nächste zu vereinzelnde Blatt zufördert, während noch das vorhergehende auf der anderen Stapelseite zurückkommt.

Fig. 55, 56 und 57 schließlich zeigen weitere Ausgestaltungen der erfindungsgemäßen Vorrichtung.

In Fig. 55 ist das Kontaktelement 22 von einem kompressiblen Belag 212 auf einer Trägerplatte 214 gebildet, die mittels Lenker 216 am Boden 218 eines der Rahmenteile angelenkt ist. Eine Schenkelhalsfeder 24 drückt den Belag in Anlage an die hintere Kante des abzutrennenden Blattes 188.

Gemäß Fig. 56 ist das Kontaktelement 22 als eine Platte 220 ausgebildet, die mit einer hochstehenden Leiste 222 die hintere Kante des abzutrennenden Blattes 188 hintergreift. Die Vorspannanordnung umfaßt eine Schraubenzugfeder 24, die irgendwo stationär eingehangen ist und an einer Parallelogrammgestängeanordnung 224 angreift, an die die Platte angelenkt ist. Auf diese Weise ist das Kontaktelement unabhängig von der Stapeldicke parallel zu seiner Hauptebene gehalten.

Gemäß Fig. 57 ist das Kontaktelement 22 ein Fortsatz 226, abgewinkelt von einer Blattfeder 24, die sich quer zu der durch den Pfeil 228 symbolisierten Bewegungsrichtung des abzutrennenden Blattes 188 erstreckt; auch hier ist das Kontaktelement im wesentlichen immer in derselben Wirkungsposition bezüglich der Blattkante unabhängig von der Zahl der Blätter im Stapel.

Die Fig. 58 bis 62 illustrieren die Maßnahmen, die getroffen werden können, um die Zufuhr auch dann sicherzustellen, wenn der Stapel Blätter mit erheblichen Abmessungsunterschieden in Richtung der Wechselbewegung enthält.

Fig. 58 zeigt im Längsschnitt die Situation nach einem Wechselzyklus. Ein am Schieber 14 vorgesehener Anschlag hat die dem Separator 20 abgewandten Kanten der Blätter ausgerichtet, so daß ihre unterschiedlich weit aus dem Stapel herausragenden Enden - bzw. in diesen zurückstehenden Endkanten - die in Fig. 58 angedeutete Konfiguration bilden. Der Fall, daß über einem kürzeren Blatt ein längeres Blatt liegt, ist in Fig. 59 noch einmal gesondert gezeichnet, und Fig. 61 stellt schematisch dar, was geschehen könnte, würde nicht für einen Ausgleich gesorgt: Das zweitunterste Blatt legt sich mit seiner frei vorstehenden Kante über die Endkante des untersten Blattes, und bei Auflaufen des Separatorsteges 20 wird die in Fig. 61 gezeigte Situation eintreten, bei der der Wechselvorgang gestört ist ("Doppelblattwechsel"). Um dies zu verhüten, sind Mittel vorgesehen, um zunächst einmal die Kanten der Blätter auf der dem Separatorsteg zugekehrten Seite des Stapels etwas auszurichten. Hierzu dient zunächst ein "Leerhub" des Separatorsteges 20, bis er die Stufe 68 überläuft. Während dieses Hubes erfolgt also noch keine Trennung. Gleichwohl werden die dem Separatorsteg abgewandten Endkanten der Blätter bereits auf diesem Leerhubweg von einer ersten Kontaktfläche 230 abgestützt. Blätter, die Übermaß haben, werden vom Separatorsteg zurückgedrückt und springen von der Kontaktfläche 230 ab; Blätter mit Untermaß bleiben noch auf der ersten Kontaktfläche. Die von dieser abgesprungenden Blätter werden jedoch von einer zweiten Kontaktfläche, dem eigentlichen Kontaktelement 22, aufgefangen, die in einem Abstand 232 hinter der ersten vorgesehen ist, der der höchstzulässigen Längendifferenz der Blätter entspricht. In Fig. 62 ist das kürzeste Blatt durch Pfeil 234, das längste durch Pfeil 236 symbolisiert. Wenn der Separatorsteg seinen Leerhub durchlaufen hat, sind also die kürzeren Blätter von der ersten, die längeren von der zweiten Kontaktfläche abgestützt, so daß sich im Bereich der dem Separatorsteg zugekehrten Blattkanten etwa die in Fig. 60 gezeichnete Situation ergibt. - Es genügt dabei, wenn der Längenausgleich nur ungefähr erfolgt, so daß die Blätter nicht mehr biegsam genug sind, um die Situation nach Fig. 61 eintreten zu lassen.

In den Ausführungsbeispielen nach Fig. 1 bis 10 und 13 bis 33 sind die Trenneinrichtungen prinzipiell einander ähnlich. Man kann jedoch im Rahmen der Erfindung auch andere Bauarten von Trenneinrichtungen vorsehen, sofern dafür gesorgt ist, daß sie ein erstes und ein zweites Trennelement umfassen, die federnd aufeinander zu vorgespannt einen Durchlaßspalt begrenzen, der für den Eintritt des abzutrennenden Blattes eine lichte Weite von mehr als der Dicke eines Blattes und weniger als der Dicke zweier Blätter besitzt. Während des Wechselzyklus wird diese lichte Weite entweder gleich gehalten oder auf die Dicke des jeweils abgetrennten Blattes vermindert. - In den Ausführungsbeispielen nach Fig. 1 bis 10 bzw. 13 bis 33 wird das eine Trennelement von den Stufen 68 gebildet, das andere von den Schuhen 69, die unter Vorspannung durch die Feder 71 stehen.

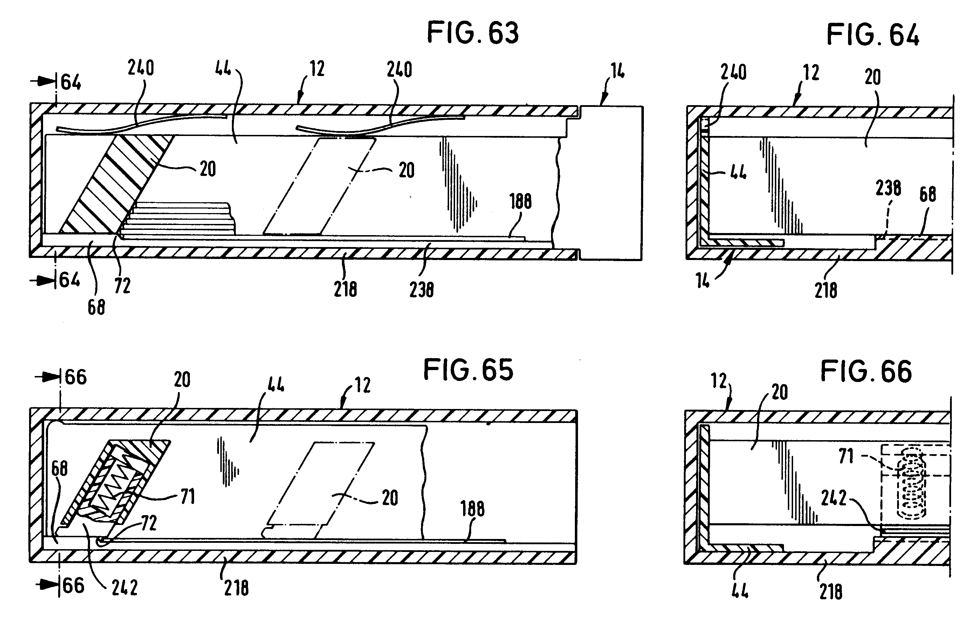

Die Fig. 63 bis 78 stellen alternative Trenneinrichtungen dar.

Allen hier dargestellten Ausführungsformen ist gemeinsam, daß der Durchlaßspalt für den Eintritt des abzutrennenden Blattes durch einen mechanischen Anschlag auf den definierten Wert der lichten Weite festgelegt ist. Im weiteren Ablauf des Wechselzyklus kann die lichte Weite entweder ebenfalls durch ein System von Anschlägen aufrechterhalten werden, oder aber der Spalt schließt sich federnd über dem abgetrennten Blatt, so daß dieses selbst die lichte Weite begrenzt.

Fig. 63 zeigt im schematischen Längsschnitt einen Fotowechsler, und Fig. 64 ist ein zugehöriger Teilquerschnitt. Das erste Rahmenteil ist als Gehäuse 12 ausgebildet, an das ein erstes, stationäres Trennelement in Form einer Rippe 238 angeformt ist, die auf dem Gehäuseboden 218 sitzt. Das zweite Trennelement wird von einem Separatorsteg 20 gebildet, der an einem relativ zu dem Gehäuse verschieblichen und das zweite Rahmenteil bildenden Schieber 14 angeformt ist. Der Schieber 14 wird von einem Blattfedersystem 240, das im Gehäuse montiert ist, auf seiner ganzen Auszugslänge in Richtung Gehäuseboden gedrückt und damit in Richtung auf die Rippen 238.

Bei vollständig eingeschobenem Schieber stößt der Separatorsteg jedoch auf eine Stufe 68, die um reichlich eine Fotodicke höher ist als die Rippe 238, womit die lichte Weite des Spalts begrenzt ist. Nach Passieren der Kante 72 der Stufe 68 drücken die Federn 240 den Separatorsteg 20 bis auf die ihm zugekehrt liegende Oberfläche des vereinzelten Blattes 188. In Fig. 64 erkennt man noch die Holme 44 des Schiebers, zwischen denen sich der Separatorsteg erstreckt und an die er einstückig angeformt ist.

Die Ausführungsform nach Fig. 65 (Längsschnitt) und 66 (Teilquerschnitt) unterscheidet sich von der zuvor beschriebenen dadurch, daß nicht der gesamte Schieber 14, sondern nur ein Teil 242 des Separatorsteges 20 von einer im letzteren selbst untergebrachten Federanordnung 71 in Richtung Gehäuseboden 218 gedrückt wird, während der Schieber in dieser Richtung abgestützt ist. Die Funktion ist im übrigen dieselbe.

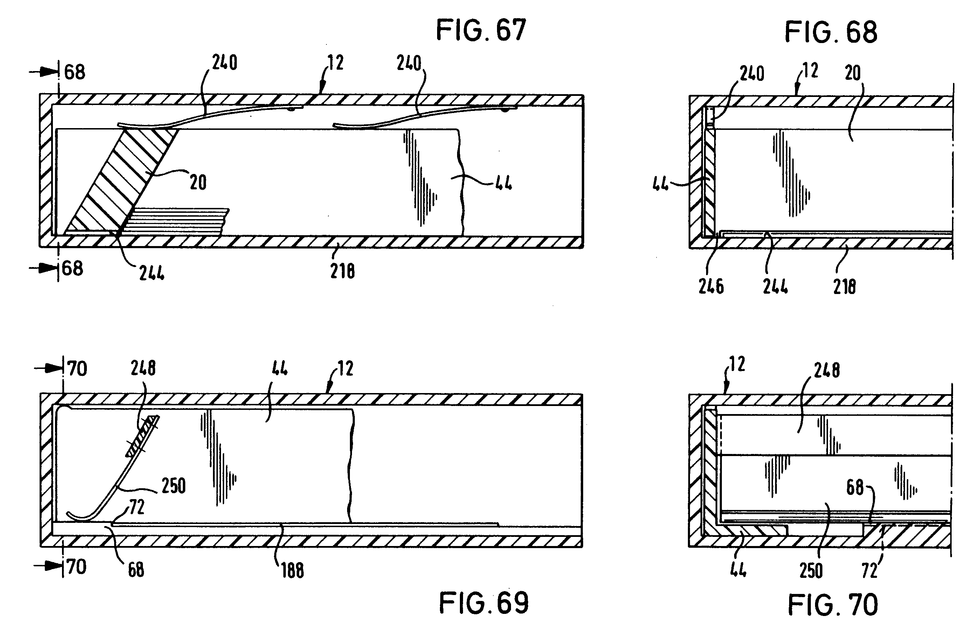

Die Ausführungsform nach Fig. 67 (Längsschnitt) und 68 (Querschnitt) unterscheidet sich von der nach Fig. 63, 64 dadurch, daß zwar auch hier der Schieber von dem Blattfedersystem 240 in Richtung Gehäuseboden 218 gedrückt wird, jedoch keine Stufe am Gehäuse vorgesehen ist; vielmehr sind an den Separatorsteg 20 beidseits des Blattdurchlaßspaltes 244 Schuhe 246 angeformt, die sich auf dem Gehäuseboden 218 abstützen und so ständig die lichte Weite des Spalts auf dem gewünschten Wert halten.

Die Ausführungsform nach Fig. 69 (Längsschnitt) und 70 (Teilquerschnitt) ist eine Modifikation der Ausführung nach Fig. 65 und 66. Zwischen den Schieberholmen 44 ist eine Halterung 248 angeformt, die ein stationäres Ende einer breitseitig eingespannten, elastischen Blattfeder 250 hält. Das abgerundete Ende der Blattfeder folgt der Stufe 68 und legt sich nach Passieren von deren Kante 72 auf das vereinzelte Blatt 188.

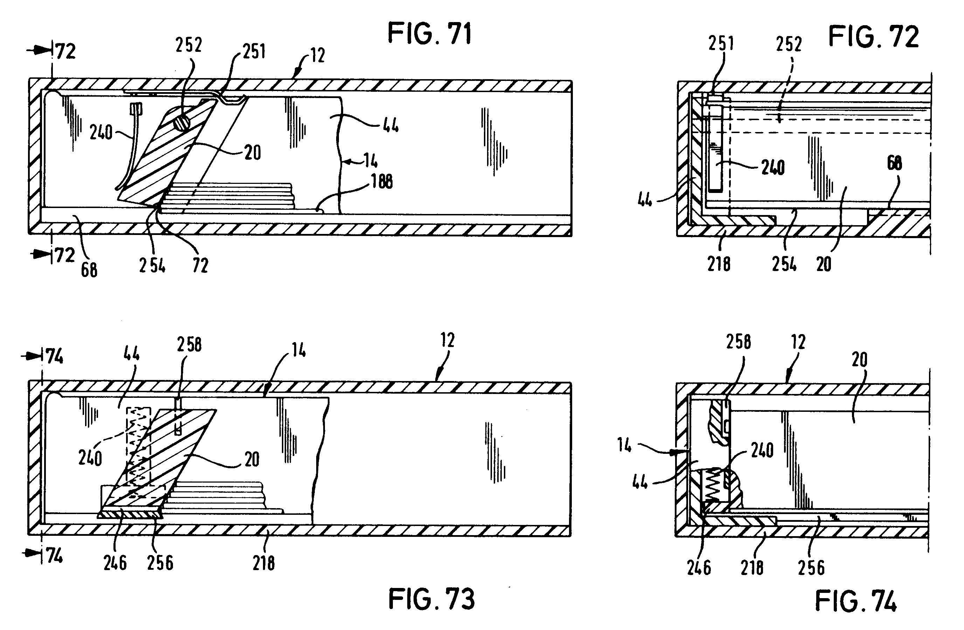

Die Ausführungsform nach Fig. 71 (Längsschnitt) und 72 (Teilquerschnitt) weist ebenfalls ein relativ zum Schieber 14 federnd auslenkbares Trennelement in Form eines Separatorsteges 20 auf, der in den Schieberholmen 44 um eine Welle 252 schwenkbar ist, jedoch von einer Federanordnung 240 mit seiner Kante 254 in Anlage an dem jeweils gegenüberliegenden Teil gehalten ist, also zunächst an der Stufe 68 und nach Passieren von deren Kante 72 an dem vereinzelten Blatt 188.

Die Ausführungsform nach Fig. 73 (Längsschnitt) und 74 (Teilquerschnitt) umfaßt als erstes Rahmenteil ein Gehäuse 12, als zweites Rahmenteil einen Schieber 14. Zwischen den Holmen 44 des Schiebers ist eine Fußplatte 256 eingefügt, die ein erstes Trennelement bildet. Das zweite Trennelement ist ein relativ zum Schieber in Richtung Gehäuseboden 218 von einer Federanordnung 240 vorgespannter Separatorsteg 20, der an Schienen 258 geführt ist und an seinem unteren Ende beidseits des zu vereinzelnden Blattes Anschlagschuhe 246 aufweist.

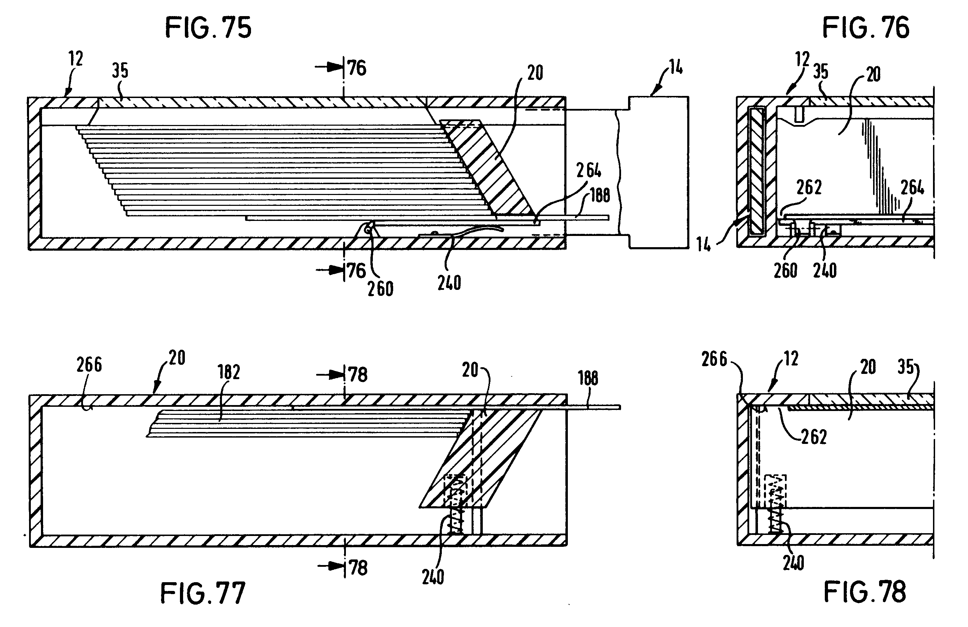

Die Fig. 75 (Längsschnitt) und 76 (Teilquerschnitt) zeigen eine Ausführungsform, bei der das erste Rahmenteil von einem Schieber 14 gebildet ist, der relativ zu einem Gehäuse 12 als zweiten Rahmenteil hin- und herverschieblich ist. Es versteht sich, daß hier wie auch bei allen anderen Ausführungsformen der maximale Hub des Schiebers durch Anschläge begrenzt ist, die aber der Klarheit wegen nicht gezeichnet sind. - An das Gehäuse 12 ist einstückig als erstes Trennelement ein Separatorsteg 20 angeformt, dem gegenüber ein zweites Trennelement in Form einer angelenkten (Gelenk 260) Platte 264 vorgesehen ist, die von einer Feder 240 in Anlage an seitlichen Stützfortsätzen 262 des Separatorsteges gedrückt wird. Die Platte 264 kann also fertigungsbedingte Toleranzen auffangen, während die Spalthöhe stets durch die Höhe der Fortsätze 262 festgelegt ist, die praktisch unveränderlich ist.

Die Fig. 77 (Längsschnitt) und 78 (Teilquerschnitt) zeigen eine Ausführungsform, bei der das Gehäuse 12 das zweite Rahmenteil bildet und ein (nicht gezeichneter) Schieber das erste Rahmenteil. Am Gehäuse ist ein Separatorsteg 20 gleitbeweglich quer zur Stapelhauptebene geführt und steht unter Vorspannung durch eine Federanordnung 240. Mit seinen Stützfortsätzen 262 definiert er die Spalthöhe, die auf der anderen Seite durch die Gehäusedeckwand 266 definiert wird.

In den Ausführungsbeispielen nach Fig. 1 bis 10 und 13 bis 33 sind einander ähnliche, auf demselben Prinzip beruhende, erste Halteeinrichtungen vorgesehen, mittels denen das abgetrennte Blatt am ersten Rahmenteil gehalten ist. In Verbindung mit der Zufuhreinrichtung gemäß der vorliegenden Erfindung können aber auch abweichend gestaltete erste Halteeinrichtungen verwendet werden, die in den Fig. 79 bis 96 illustriert sind und nachstehend erläutert werden.

Fig. 79 ist ein Teillängsschnitt, Fig. 80 ist ein Horizontalschnitt und Fig. 81 ist ein Querschnitt durch die entsprechenden Ebenen der Vorrichtung.

Das erste Rahmenteil hat die Form eines Gehäuses 12, das zweite die Form eines Schiebers 14. Die Trenneinrichtung in Form des Separators 20 überspannt quer die Schieberholme 44. Im Ruhezustand, dargestellt in Fig. 80, drückt der Separator auf die Steuerflügel 268 zweier Hebel 270, die um parallel zur Auszugsrichtung sich erstreckende Achsen schwenkbar sind, die mit 272 bezeichnet sind. An den den Flügeln 268 abgewandten Enden der Achsen befinden sich Arme 274, die aufeinander zu gerichtet sind. Die Hebel stehen unter Vorspannung durch eine Blattfeder 276 derart, daß die Arme 274 die Tendenz haben, in Richtung des eingelegten Blattstapels zu schwenken.

Wenn der Schieber eine Hublänge zurückgelegt hat, die ausreicht, das Einzelbild mittels des Mitnehmers (nicht gezeigt) unter dem Durchlaßspalt des Separators durchzuschieben, gibt der Separator die Flügel 268 allmählich frei, und die Arme 274 legen sich von unten an das nun unterste Blatt des Reststapels und hinter die Kante des im Gehäuse zurückgebliebenen Blattes, so daß dieses mit Sicherheit im Gehäuse zurückbleibt, während der Separator den Reststapel aus dem Gehäuse heraustransportiert. Die Vorspannung der die Arme 274 hebenden Feder kann so groß sein, daß deren freie Enden sich nicht nur an den Reststapel anlegen, sondern diesen noch ein Stück anheben: So kann das Einzelblatt nicht von den Armen abrutschen. - In der Endstellung des Schiebers kann der Separator gerade die Arme 274 gegen die Federkraft nach unten drücken, da er eine entsprechend abgeschrägte From hat und als Keil wirkt. - Beim Rückhub kommt der Reststapel mit dem Separator und dem Schieber zurück und legt sich auf die Arme. Erst wenn der Separator auf die Flügel aufgleitet, werden die Arme wieder in die Ausgangsposition umgelegt.

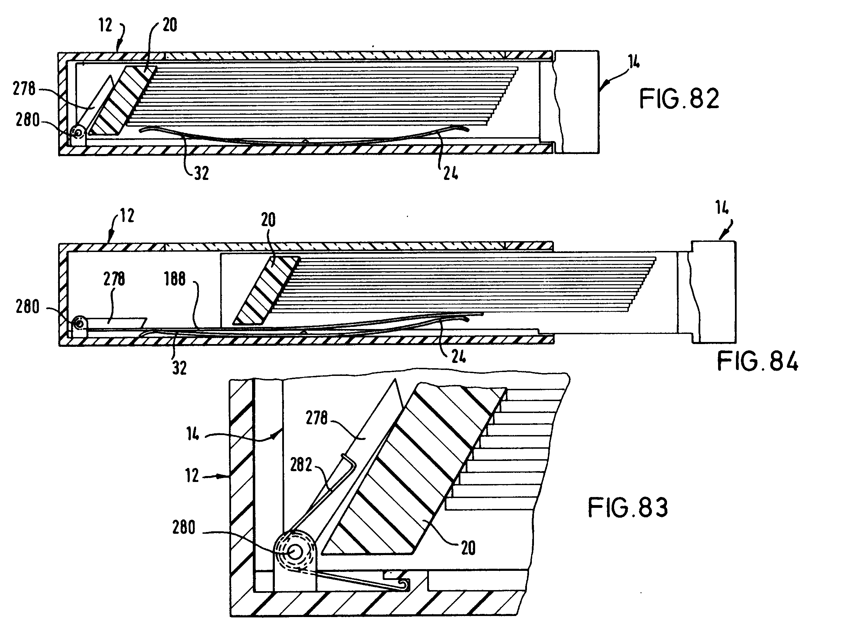

Fig. 82 und 84 zeigen im Längsschnitt den Ruhezustand bzw. den teilweise herausgezogenen Zustand einer Vorrichtung gemäß der Erfindung, bei der das erste Rahmenteil von einem Gehäuse 12 und das zweite von einem Schieber 14 gebildet sind. Man erkennt eine Federanordnung 24/32 und den Separatorsteg 20 als Trenneinrichtung.

Zu Beginn des Auszugshubes des Schiebers führt die Zufuhreinrichtung das im Gehäuse unterste Blatt 188 unter dem Separatorsteg durch, hinter dem eine schwenkbare Backe 278 um ein Gelenk 289 drehbar angeordnet ist. Eine Feder 282 spannt die Backe 278 in die in Fig. 84 gezeichnete Position vor, wie man der vergrößerten Darstellung nach Fig. 83 entnimmt. Der Separatorsteg hat die Backe bei eingeschobenem Schieber in die inaktive Position infolge Keilwirkung beim Auflaufen umgelegt. Die Freigabe der Backe kann automatisch beim Auszug erfolgen, doch ist dies nicht im einzelnen dargestellt.

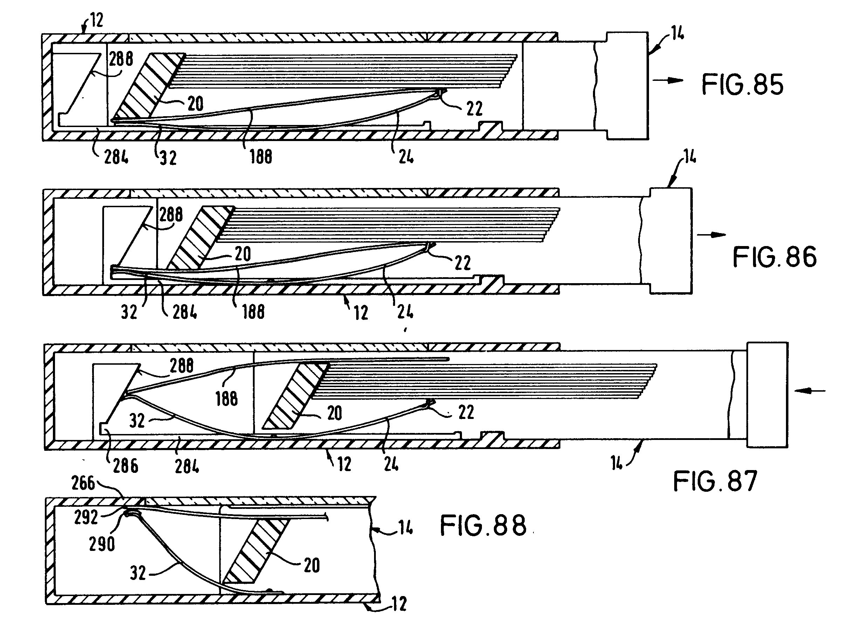

Fig. 85, 86 und 87 zeigen im schematisierten Längsschnitt drei Phasen des Auszugshubes bei einer weiteren Aufführungsform. Die Zufuhr des abzutrennenden Blattes erfolgt mittels des Kontaktelements, nämlich des Hakens 22, der an dem Federarm 24 sitzt. Gehäuse, Schieber und Separatorsteg entsprechen den vorher geschilderten Ausführungen. Der als zweites Rahmenteil dienende Schieber 14 koppelt sich nach einer gewissen Auszugslänge mit einem Bügel 284, der längsverschieblich in dem das erste Rahmenteil bildenden Gehäuse 12 angeordnet ist. An dem Bügel ist eine Einsenkung 286 unterhalb einer Leitfläche 288 angeformt.

Sobald das Kontaktelement infolge eines ersten Hubes des Schiebers, die führende Kante des abzutrennenden Blattes 188 unter dem Separator 20 durchgeschoben hat, beginnt der Schieber auch, nun gekoppelt mit dem Bügel 284, diesen in Auszugsrichtung mitzunehmen, mit der Folge, daß diese Kante des abgetrennten Blattes in die Einsenkung 286 gelangt und dort von dem Arm 32 der Federanordnung festgeklemmt wird. Dieser Federarm bildet eine Backe einer Zangenanordnung, und die auf der anderen Seite der festgeklemmten Kante des Blattes befindliche Randfläche der Einsenkung bildet die andere Backe der Zangenanordnung. Dieser Zustand bleibt, bis die hintere Kante des abgetrennten Blattes vom Separator freikommt. Schiebt man nun den Schieber wieder ein, so nimmt er den Bügel 284 wieder mit einwärts in das Gehäuse, wobei die Einsenkung vom abgezogenen Blatt freikommt, so daß der freie Arm 32 der Federanordnung die von ihm abgestützte Kante des Blattes längs der Leitfläche 288 ruckfrei nach oben gleiten läßt.

Fig. 88 zeigt weitgehend schematisiert im Teillängsschnitt eine Ausführungsform, bei der der am Schieber 14 angebrachte Separatorsteg 20 infolge Herausziehens des Schiebers aus dem Gehäuse 12 die an diesem angebrachte Blattfeder 32 allmählich freigibt, so daß sich deren freies Ende, versehen mit einem Haftbelag 290, an die Blattkante 292 anlegt und diese gegen die Gehäusedeckwand 266 anpreßt, welche dann die andere Backe im Zusammenwirken mit der von der Feder gebildeten ersten Backe bildet.

Die beschriebenen Zangenanordnungen sind nur einige von einer Vielzahl möglicher Ausführungsformen; so könnte man anstatt an der Führungskante des Blattes zu klemmen auch an einer oder beiden Seiten mit ähnlichen Zangen angreifen, oder man könnte nicht die Dicke, sondern die Breite des Blattes zwischen den Backen einspannen.

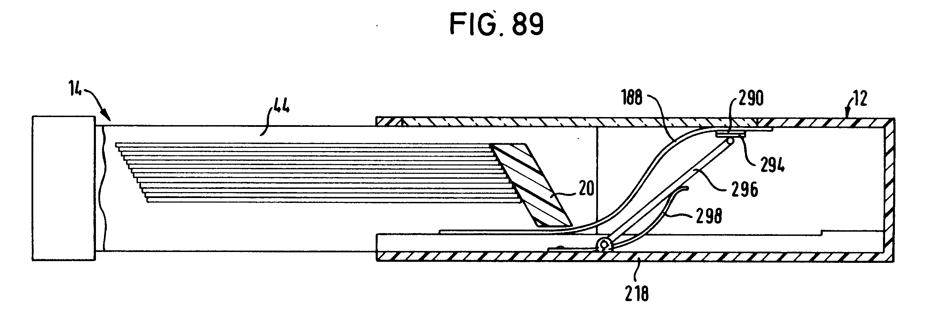

Fig. 89 stellt eine Abwandlung der Zangenanordnung nach Fig. 88 dar: Der Haftbelag 290 befindet sich auf einer Andruckanordnung, bestehend aus einer den Haftbelag tragenden Platte 294, die gelenkig am Ende eines Hebels 296 sitzt. Der Hebel ist an den Gehäuseboden 218 angelenkt. Eine Feder 298 drückt den Haftbelag an das vereinzelte Bild.

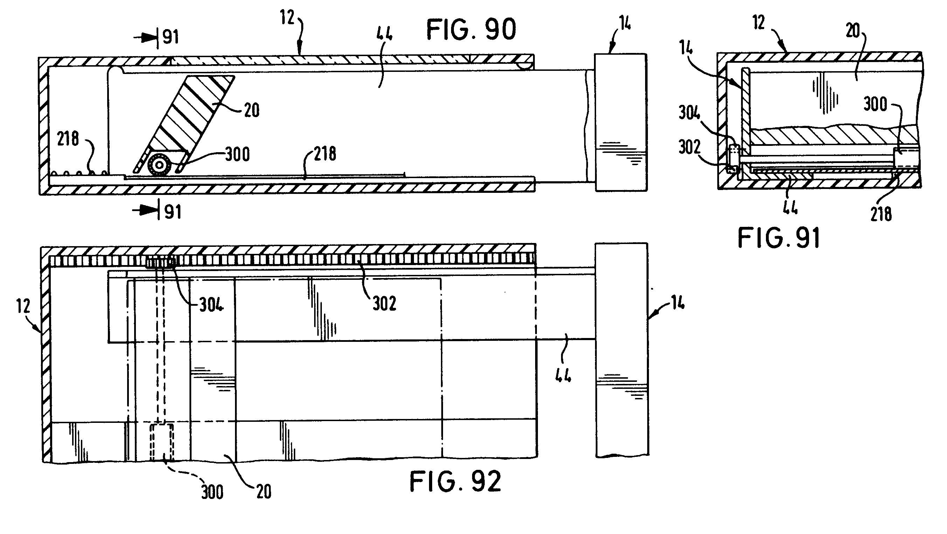

Fig. 90 bis 92 beziehen sich auf einen anderen Typ der ersten Halteeinrichtung.

Fig. 90 zeigt in einem schematisierten Längsschnitt eine Vorrichtung gemäß der Erfindung, Fig. 91 ist ein Teilquerschnitt zu dieser Figur, und Fig. 92 zeigt einen Teilhorizontalschnitt.

Während in dem unter Fig. 1 bis 10 ausführlich beschriebenen vollständigen Ausführungsbeispiel die Halteeinrichtung ein erstes Klemmelement in Form einer mit dem Separatorsteg mitlaufenden Rolle, ein zweites Klemmelement in Form des stationär am ersten Rahmenteil (Gehäuse) befestigten Haftbelags und eine Federanordnung in Form der den Schuh gegen den Haftbelag drückenden Feder umfaßte, sind hier die Klemmelemente in kinematischer Umkehr so ausgebildet, daß der Haftbelag am Umfang einer Walze 300 vorgesehen ist, die über eine Zahnstange 302 und ein mit der Walze verkeiltes Ritzel 304 beim Auszug des Schiebers 14, der das zweite Rahmenteil bildet, zum Umlauf angetrieben ist. Die Walze hat einen Durchmesser gleich dem Teilkreis des Ritzels, so daß sie sich auf dem Einzelblatt mit einer Umfangsgeschwindigkeit abwälzt, die gleich der Auszugsgeschwindigkeit des Schiebers ist. Dabei wird das Einzelblatt an den Boden 218 des ersten Rahmenteils in Form des Gehäuses 12 gepreßt und in diesem festgehalten.

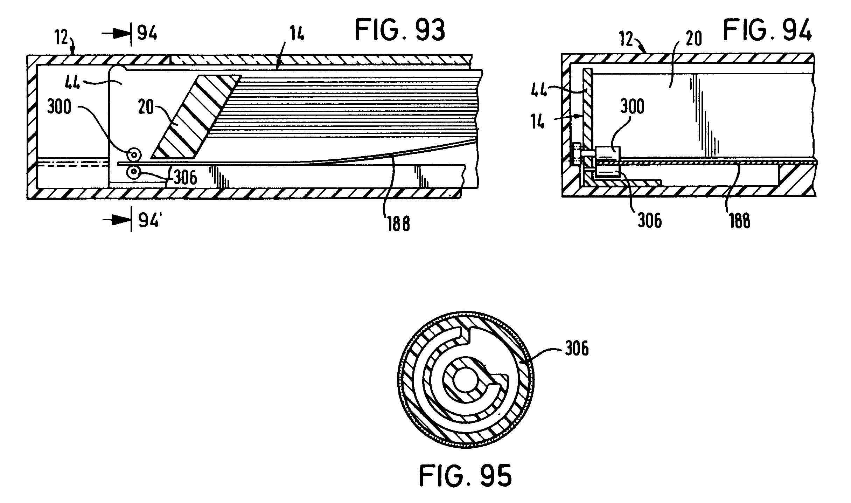

Die Vorrichtung nach Fig. 93 bis 95 zeigt eine weitere Ausführungsform der ersten Halteeinrichtung. Das Einzelblatt 188 gelangt hinter dem Separatorsteg 20 in den Arbeitsspalt zwischen zwei Walzen 300, 306, von denen mindestens eine in derselben Art angetrieben ist wie bei Fig. 90 bis 92 beschrieben. Die andere Walze kann auch direkt von der ersten angetrieben sein, oder aber durch Reibung mitgenommen werden. Der Anpreßdruck wird dadurch erzeugt, daß eine der Walzen, vorzugsweise die nicht angetriebene, in sich federnd ausgebildet ist und ihre Welle etwas näher an die andere Walze herangerückt ist als dem Durchmesser eigentlich entsprechen würde. Der Querschnitt durch eine solche federnde Walze ist in Fig. 95 dargetellt, und man erkennt, daß Ausnehmungen in sich geschlossen sich mäanderförmig rings um die Nabe erstrecken, so daß immer genug Federweg zur Verfügung steht.

Demgemäß übernimmt hier die zweite Walze 306 die Rolle des in Fig. 1 bis 10 bzw. 13 bis 33 schienenförmig im ersten Rahmenteil angeordneten Klemmelements, wofür sie nicht an dem ersten, sondern an dem den Stapel haltenden zweiten Rahmenteil drehbar gelagert ist.

Fig. 96 zeigt eine im Gehäuse 12, das hier das zweite Rahmenteil ist, drehbar gelagerte Walze 300, die über eine in den Schieberholmen 44 angebrachte Zahnstange (nicht gezeigt) und ein mit der Walze verkeiltes Ritzel (nicht gezeigt) zu einer Umfangsgeschwindigkeit angetrieben wird, die gleich ist der Auszugsgeschwindigkeit des Schiebers. Auf diese Weise wird das vereinzelte Bild 188 hinter dem Separatorsteg 20 erfaßt, gegen die Gehäusedeckwand 266 gepreßt, an der es entlang schleift, und in der äußeren Schieberendlage freigegeben. - Es versteht sich, daß als Zufuhreinrichtung jeweils eine der in Fig. 1 bis 57 dargestellten Anordnungen vorgesehen ist, ohne daß dies jedesmal mit gezeichnet wurde.

Ebenso, wie die Trenneinrichtung und die Halteeinrichtung in verschiedenster Weise ausgebildet sein können, um mit der Zufuhreinrichtung gemäß der Erfindung zusammenzuwirken, kann auch die Leiteinrichtung von der Ausführung gemäß Fig. 1 bis 10 bzw. 13 bis 33 abweichen. Dies wird nachstehend unter Bezugnahme auf Fig. 97 bis 113 verdeutlicht.

In den zuvor beschriebenen Ausführungsbeispielen wurde die Leiteinrichtung hinsichtlich ihrer verschiedenen Aspekte nur am Rande diskutiert. Gerade für Fotoabzüge jedoch bietet auch sie gewisse Komplikationen. Da das vereinzelte Blatt unter Umständen ziemlich stark gewölbt sein kann, erweist es sich als zweckmäßig oder sogar als unumgänglich, gewisse Vorsichtsmaßregeln bei der Auslegung der Leiteinrichtung zu beachten. So muß das vereinzelte Foto wieder durch einen Durchlaß der Trenneinrichtung auf die andere Stapelseite geführt werden, wenn auch dieser Durchlaß viel weniger kritisch ist als der Abtrenn-Durchlaß. - Im Prinzip sind alle Konstruktionen, die für die Zufuhr verwendbar sind, auch für die Rückführung des Einzelblattes anpaßbar. Im allgemeinen aber genügt es, das Foto von seiner hinteren Kante aus zu schieben, wobei es gegebenenfalls noch festgeklammert wird. Nachstehend werden einige Ausführungsformen kurz beschrieben.

Hinsichtlich des erwähnten Rücklauf-Durchlasses ist Vorsorge dafür zu treffen, daß der Reststapel diesen Durchlaß nicht versperrt; diese Gefahr besteht besonders bei Stapeln stark gewölbter Fotoabzüge. - Oben wurde unter Bezugnahme auf Fig. 1 bis 8 erläutert, daß man dafür am ersten Rahmenteil Niederhalte-Fortsätze anbringen kann. An deren Stelle kann man aber auch am ersten oder am zweiten Rahmenteil ein den Rückführ-Durchlaß durchgreifendes Element vorsehen, welches nach beendetem Wechselzyklus wieder zurückgezogen wird.

Ferner ist dafür zu sorgen, daß der Rückführdurchlaß bei Beginn des Wechselzyklus gesperrt ist, damit nicht von beiden Seiten des Stapels je ein Blatt abgezogen wird. Oben wurde unter Bezugnahme auf Fig. 1 bis 8 erläutert, daß man dafür kammartig ineinandergreifende Fortsätze am Separatorsteg einerseits, am ersten Rahmenteil andererseits verwenden kann; an deren Stelle kann man aber auch zum Beispiel eine aus dem Separatorsteg ausfahrende gesteuerte Blockiereinrichtung vorsehen.

Fig. 97 zeigt im schematisierten Längsteilschnitt eine Bauart, die sowohl den Reststapel für den Einschub des vereinzelten Blattes niederhält als auch den Rückkehr-Durchlaß während des Wechselzyklusbeginns blockiert:
Im als Trenneinrichtung vorgesehenen Separatorsteg 20 ist eine dünne, elastische Lamelle 308 angeordnet, die zwischen Niederhalter 36 an einer Deckwand des ersten Rahmenteils greift. Das freie Ende der Lamelle drückt dabei auf das ihm zugekehrt liegende Blatt des Reststapels 182. Die Lamelle ist, um ein kurzes Wegstück in Rahmenbewegungsrichtung verlagerbar, im zweiten Rahmenteil abgestützt, so daß es zu Beginn des nächsten Wechselzyklus nach links (in Fig. 97) ausweichen kann, jedoch dabei den Durchlaß 310 immer noch blockiert, so daß das zuletzt rückgeführte Blatt von dem Niederhalter auf den Reststapel gedrückt wird, bevor die Lamelle wieder eingefahren wird.

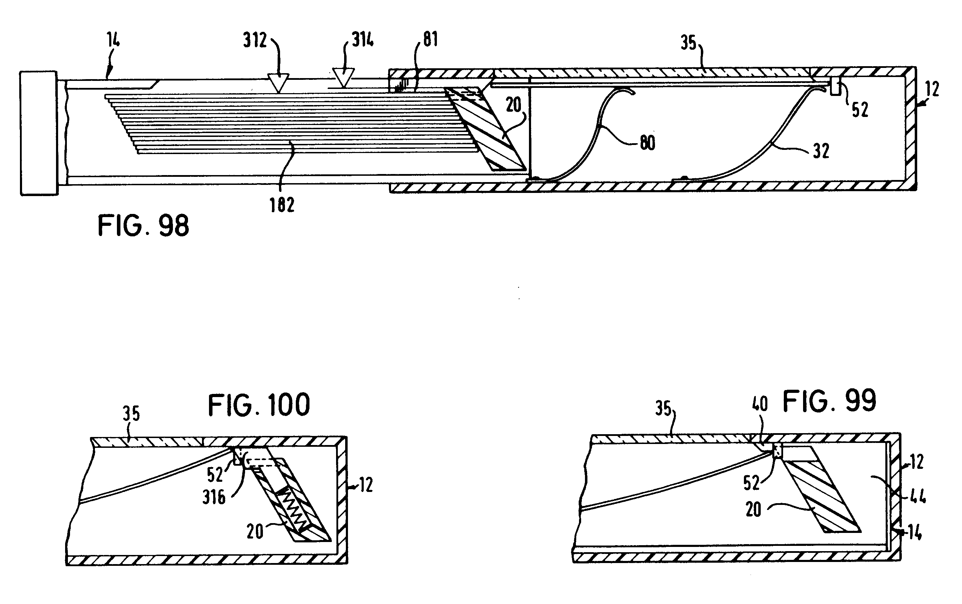

Fig. 98 zeigt im schematisierten Schnitt die bevorzugten Mittel: Feder 32 hält die hintere Blattkante vor dem Schiebeanschlag 52, Feder 80 unterstützt das Blatt etwa mittig, und hinter dem Separatorsteg 20 wird der Reststapel 182 auf einem Niveau gemäß Pfeil 312 gehalten, indem die Niederhalter 81 auf ihn einwirken. Der Pfeil 314 definiert das Niveau derjenigen Kante des Separatorsteges, die vom Einzelblatt überlaufen wird und die im kämmenden Eingriff mit den Niederhaltern steht.

Fig. 99 stellt in schematischer Teilseitenschnittansicht eine Konstruktion dar, mit der verhindert wird, daß bei der Abtrennphase des Wechselzyklus auf dem Durchlaß für die Blattrückführung fälschlicherweise auch ein Blatt in den Spalt gelangen kann. Dies erfordert hier die Rippen 40, welche kammartig in Ausnehmungen des Separatorsteges 20 greifen.

Alternativ sind in Fig. 100 aus dem Separatorsteg ausfahrende Sperrglieder 316 dargestellt, die den Durchlaß erst freigeben (entweder durch Federwirkung infolge Keilauflauf oder zwangsgesteuert), wenn in der Rückführphase eine Blattkante ansteht ("Rückschlagventilprinzip").

Die folgenden Figuren beziehen sich auf Mittel zum Sicherstellen der Blattrückführung selbst. Wie erwähnt, wird vorzugsweise das Einzelblatt durch den Durchlaß geschoben, mit seiner hinteren Kante an einem Anschlag anliegend. Wenn das Blatt um einen Krümmungsradius gewölbt ist, der etwa senkrecht zur Bewegungsrichtung liegt, so besteht das Risiko, daß das Blatt nicht durch den Durchlaß geschoben, sondern zusammengestaucht wird und/oder von dem Anschlag abrutscht.

Im Prinzip sind also bei der Leiteinrichtung solche Mittel vorzusehen, die das Einzelblatt möglichst sicher vor dem "schiebenden" Anschlag halten, und/oder Mittel, die eine etwaige Wölbung des Fotos ausgleichen oder mildern.

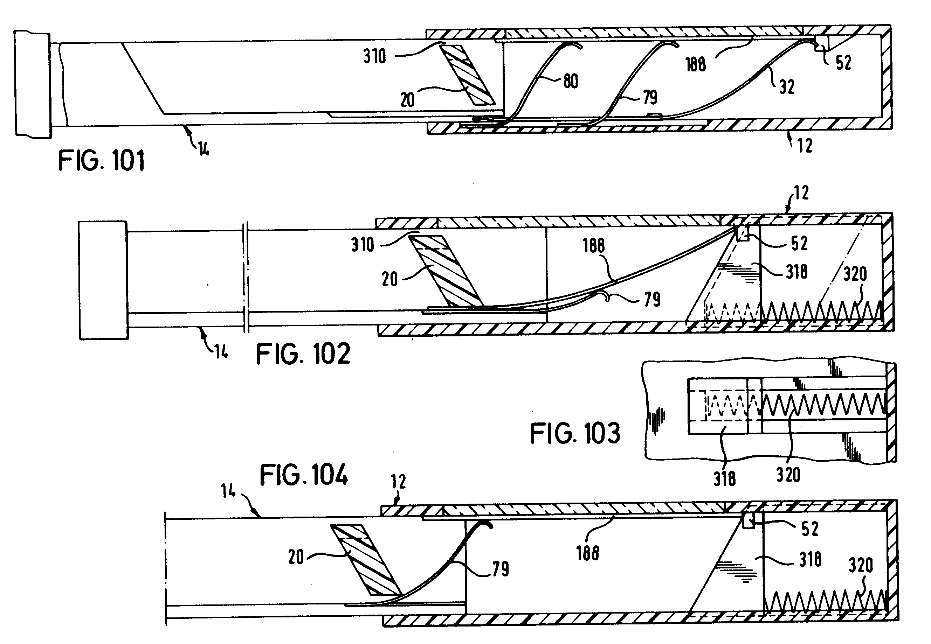

Fig. 101 zeigt im schematisierten Längsschnitt ganz prinzipiell diese Mittel: Eine erste Blattfeder 32 klemmt das Einzelblatt 188 vor dem "schiebenden" Anschlag 52, und weitere Blattfedern 79, 80 drücken das Blatt möglichst eben an die Deckwand des Gehäuses 12 (erstes Rahmenteil), um die führende Kante des Einzelblattes einigermaßen genau vor dem Durchlaß 310 zu präsentieren. Die Zuverlässigkeit wird umso besser sein, je länger die Blattfedern an dem Einzelblatt während des Blattrücklaufs angreifen, ehe diese Federn von dem Separatorsteg 20 der Trenneinrichtung überlaufen werden. Die dem Einzelblatt 188 zugekehrte Seite des Separatorsteges ist vorzugsweise derart abgeschrägt, daß eine vor ihm abwärts gewölbte führende Kante des Einzelblattes längs der Schräge "heraufklettern" kann infolge der Keilwirkung dieser Schräge. Wird jedoch diese Blattkante durch andere Mittel dem Rückführdurchlaß zwangsweise präsentiert, kann die entsprechende Fläche des Separatorsteges auch senkrecht zur Blattebene verlaufend ausgebildet sein.

Anstelle der Blattfeder 32 kann man andere Mittel verwenden, um die dem Separatorsteg abgewandte Kante des Einzelblattes an die andere Gehäusekante zu verlagern. Dies ist in Fig. 102 dargestellt: Ein Keil 318 ist von einer Feder 320 unter diese Kante des Blattes 188 geschoben worden und hat sie vor den schiebenden Anschlag 52 gehoben, und zwar noch während der ersten Hälfte des Wechselzyklus. Die andere Blattkante wird dann, nach Passieren des Separatorsteges 20, von einer Blattfeder 79 vor den Rückführdurchlaß 310 gehoben. Gegen Ende der zweiten Phase des Wechselzyklus schiebt dann der Separatorsteg den Keil 318 zurück. - Anstelle der Feder 320 könnte der Keil 318 auch durch eine Kopplung mit dem zweiten Rahmenteil, allerdings mit Phasenverschiebung, von diesem hin- und herverlagert werden. - Anstelle des verschieblichen Keils könnten auch ein- und ausschwenkbare schräge Keilflügel vorgesehen sein, ohne daß sich am Wirkprinzip etwas ändert. Fig. 103 zeigt schematisch die Draufsicht auf den Keil 318, und Fig. 104 stellt die Situation am Umkehrpunkt des Wechselzyklus dar.

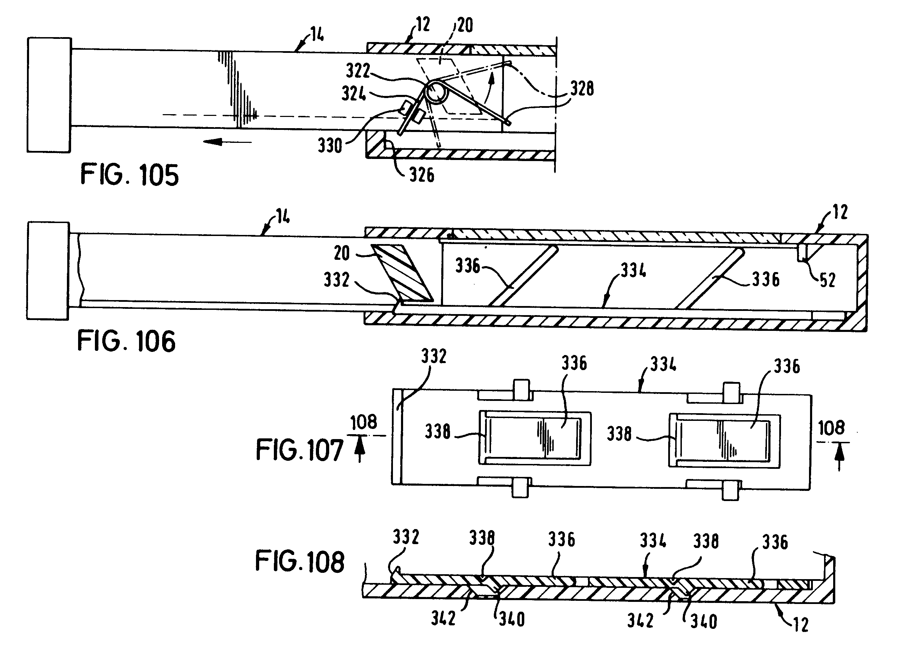

Fig. 105 zeigt in schematischer Seitenansicht einen Mechanismus, der anstelle der Hebefeder 79 verwendbar ist. Um einen Zapfen 322 ist eine Drahtfeder 324 mit ihrer Öse schwenkbar. Einer ihrer Arme ist abgewinkelt und greift von außen quer unter die betreffende Kante des Einzelblattes, der andere Arm ist durch Auflaufen auf einen Anschlag 326 umlegbar, nimmt dabei den abgewinkelten Arm 328 mit und bewirkt so das Heben der Blattkante. Eine Rasteinrichtung 330 ist angedeutet, um unkontrollierte Bewegungen des Mechanismus zu unterbinden; dieser soll ja nur in den beiden Endlagen (Ruheposition / Umkehrpunkt) umgesteuert werden.

Fig. 106 bis 108 zeigen eine Variante der Hebelanordnung als Leiteinrichtung. Der Separatorsteg 20 läuft kurz vor seiner Umkehrstellung auf einen Mitnehmerhaken 332 eines Hebelträgers 334 auf, an dem zwei Hebel 336 mittels angespritzter Gelenke 338 angelenkt sind. Durch die Verlagerung des Hebelträgers laufen die an der Unterseite der Hebel angeformten Nocken 340 auf Anschläge 342 einer Steuerkurve auf, so daß die Hebel hochgestellt werden. Beim Rücklauf trifft der Separatorsteg zuerst auf den ihm näheren Hebel und drückt dabei den gesamten Hebelträger um ein kleines Stück zurück, bis der Hebel umgelegt ist; der andere Hebel hingegen bleibt noch stehen, weil die Anschläge 342 für die beiden Hebel einen größeren Abstand voneinander haben als die zugehörigen Nocken.

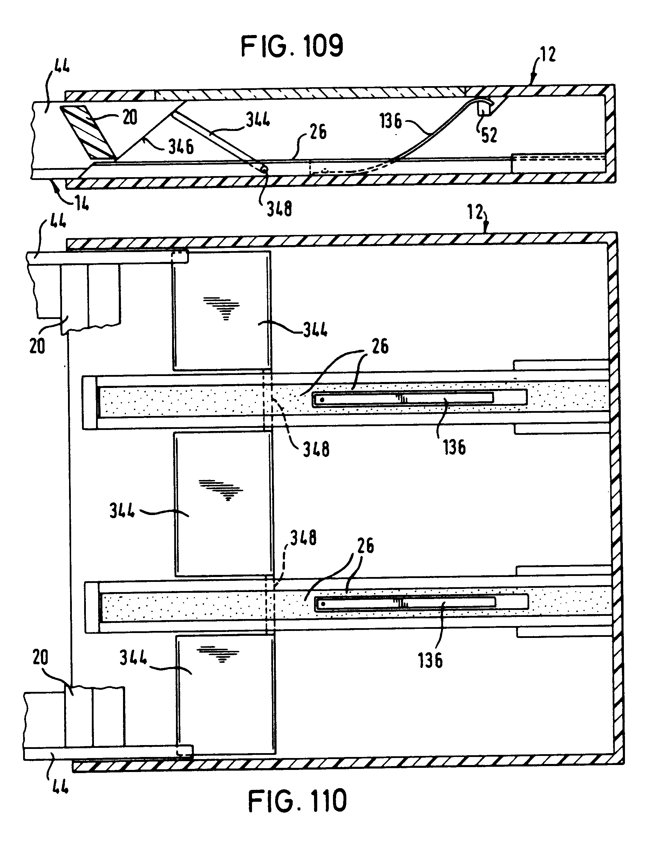

Die Ausführungsform nach Fig. 109 und 110 stellt eine Ausführungsform dar, bei der die Halteeinrichtung für das Einzelbild Haftbeläge 26 im ersten Rahmenteil umfaßt. Infolge statischer Aufladung kann, wie oben erwähnt, das Einzelblatt so fest an den Haftbelägen kleben, daß erhebliche Kräfte nötig sind, um es dort abzureißen. Es muß aber auf die den Haftbelägen abgewandte Seite des Rahmenteils geleitet werden. Daher sind Federn 136 mittig zwischen je zwei Haftbelägen vorgesehen. Die dem Separatorsteg 20 zugekehrte Kante des Einzelblattes wird von einem Hebel 344 geliftet, der mittels Steuerschrägen 346 an den Enden der Schieberholme 44 niedergedrückt werden, während er durch Federkraft (nicht dargestellt) gehoben wird. Der Hebel erstreckt sich, wie man in Fig. 110 sieht, über die gesamte Breite der Vorrichtung, und insbesondere greift er auch unmittelbar neben den Haftbelägen an dem Einzelblatt an. Die Welle des Hebels ist mit 348 angedeutet.

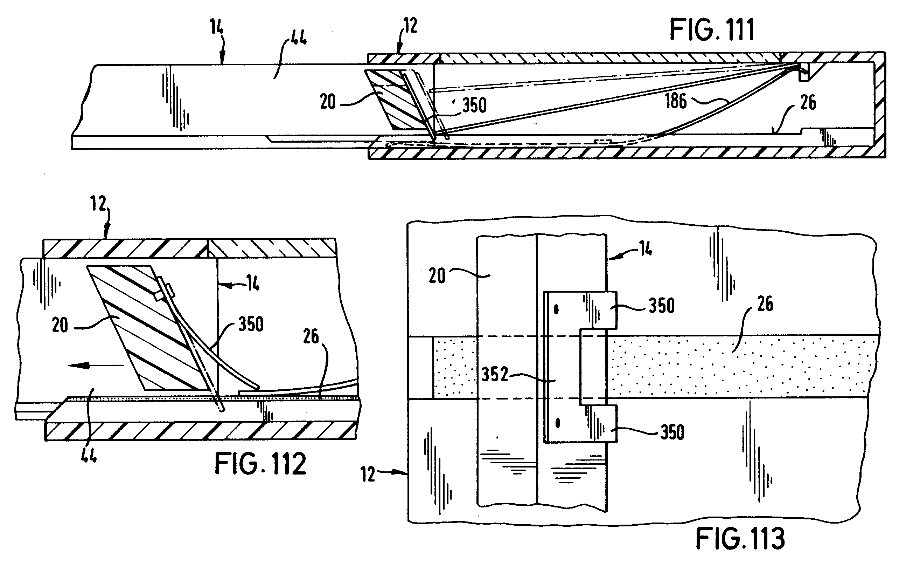

Fig. 111 bis 113 zeigen eine weitere Variante. An dem Separatorsteg 20 ist beidseits des Haftbelags 26 eine Lamelle 350 angeordnet, die federnd in eine entsprechende Ausnehmung neben dem Haftbelag greift. Die beiden Lamellen sind durch eine Brücke 352 miteinander verbunden. Beim Durchlauf des Einzelblattes wird jede Lamelle federnd angehoben und schnappt nach Passieren der hinteren Blattkante wieder in die Ausnehmung zurück, so daß beim Rückhub die betreffende Blattkante vom Haftbelag abgerissen wird und die Kante längs des Separatorsteges hochsteigen muß, weil der Rückweg durch den anderen Durchlaß nun durch die Lamellen sicher versperrt ist.

Schließlich sind in Fig. 1 bis 10 einerseits, Fig. 13 bis 33 andererseits jeweils Mittel dargestellt, um die Entnahme des gesamten Stapels aus der Vorrichtung zu ermöglichen. In Fig. 114 bis 123 sind Varianten und auch prinzipiell anders wirkende Mittel für diesen Zweck dargestellt, die nachstehend erläutert werden.

Fig. 114 zeigt im Teillängsschnitt eine Ausführungsform, bei der die Trenneinrichtung wahlweise durch manuellen Eingriff gesperrt werden kann. Es sei angenommen, daß eine Trenneinrichtung nach Fig. 63, 64 vorliegt, doch ist hier vom Schieber nur der Separatorsteg 20 gezeichnet. Die Stufe 354 ist nicht stationär, wie in Fig. 63 und 64, sondern in Schieberbewegungsrichtungverschieblich, wobei die Verschiebung von Hand mittels einer durch den Gehäuseboden 218 ragende Taste 87 erfolgen kann. In der mit ausgezogenen Linien dargestellten Position entspricht dies der Fig. 63 (Normalbetrieb). Wird jedoch die Taste mit der Stufe nach rechts verlagert, so greift das keilartig ausgebildete Ende 356 unter die ihm zugekehrt liegende Kante des im Stapel untersten Blattes 188 und hebt diese auf die Stufe 354, so daß der Durchlaßspalt unter dem Separatorsteg "geschlossen" ist.

Die Stapelentnahmefunktion ist auch bei der Ausführungsform nach Fig. 115 (Teillängsschnitt) manuell steuerbar. Es sei angenommen, daß als Ausgangskonstruktion die nach Fig. 67 und 68 vorgesehen ist.

Der Separatorsteg 20 hat eine Durchbrechung, in der verschieblich ein Sperrklotz 358 angeordnet ist. In der mit ausgezogenen Linien dargestellten Position ist der Wechsler auf Wechselfunktion geschaltet, wobei der Klotz mittels Nocken 360 in einer entsprechenden Öffnung der Durchbrechung einrastet. Wird er durch Druck auf einen Knopf 87, der federnd an einer angeformten Feder 362 sitzt und mit dem Gehäuse 12 verbunden ist, in die mit gestrichelten Linien dargestellte Sperrposition verlagert, in welcher er ebenfalls mittels Nocken 360 verrastbar ist, so wird der Durchtrittsspalt blockiert, und alle Blätter des Stapels werden heraustransportiert. Läuft dann der Sperrklotz auf einen an den Gehäuseboden 218 angeformten Anschlag 364 auf, wird er wieder in seine Ruheposition zurückgeschoben, und der Wechsler ist wieder auf Funktion "Wechseln" geschaltet.

Auch bei der Fig. 116 (Teillängsschnitt), Fig. 117 (Teilquerschnitt) und Fig. 118 (Teildraufsicht) ist eine manuelle Umschaltbarkeit zwischen "Wechseln" und "Stapelentnahme" vorgesehen. Im Gehäuse 12 ist ein einstückiges Bauteil 85 in Längsrichtung verlagerbar durch Druck auf die Taste 87, wobei die mit der Taste verbundene Schiene auf Rampen 89 aufläuft und dabei das gesamte Bauteil 85 hebt; hierfür ist im Gehäuse ein Freiraum 366 für die Taste vorgesehen. Durch Heben der Schiene legt sich diese von unten an die den Durchlaßspalt begrenzende Kante des Separatorsteges 20 an. Von diesem Ende der Schiene stehen noch Nasen 91 nach oben, die - wenn der Separatorsteg unter Mitnahme des Gesamtstapels die Nasen überläuft - nach unten ausfedern können. Wird der Separator wieder zurückgeschoben, trifft er auf die Nasen und verlagert damit das gesamte Bauteil 85 in seine Ausgangsstellung, womit auch die Bahn für den Separator wieder freigegeben ist, der Spalt für die Abtrennung des Blattes wieder offen ist und somit der Wechsler wieder in der "Wechselfunktions"-Stellung ist.

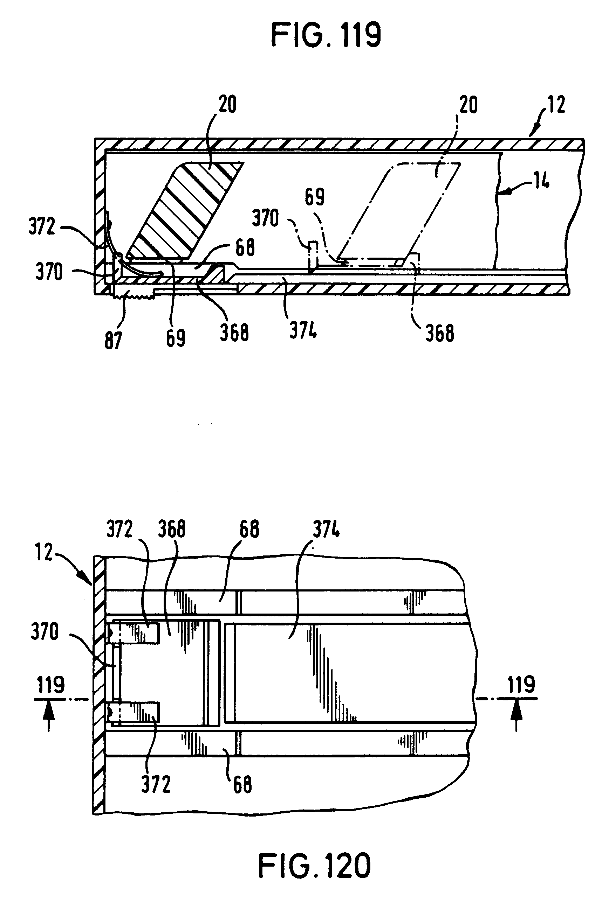

Fig. 119 und 120 zeigen im Teillängsschnitt bzw. in Teildraufsicht eine weitere Ausführungsform eines für die Stapelentnahme umschaltbaren Trennsystems. Es sei angenommen, daß im Prinzip die Bauart nach Fig. 65, 66 vorliegt. - Die in Fig. 63 mit 68 bezeichnete Stufe, die ja auch in Fig. 65 vorhanden ist, ist sehr schmal und dafür doppelt ausgeführt. Das den Durchtrittsspalt begrenzende Teil 69, das federnd im Separatorsteg 20 angeordnet ist, hat eine Aussparung gegenüber der Lücke zwischen den beiden Stufen 68. - An den Gehäuseboden 218 ist eine eindrückbare, zurückfedernde Taste 87 angeformt, die einen Blockierschuh 368 anhebt, der mit einem frontseitigen Fortsatz den Durchtrittsspalt sperrt, indem er sich vor die Unterkante des Separatorsteges legt, und mit einem rückseitigen Fortsatz 370 hinter den Separatorsteg greift. Beidseits dieses letztgenannten Fortsatzes drücken Blattfederchen 372 den Blockierschuh in Richtung Gehäuseboden. - Wird auf die Taste 87 gedrückt und der Blokkierschuh in Mitnahmeverbindung mit dem Separatorsteg gebracht, wobei die Trennfunktion blockiert ist, und nun am Schieber gezogen, so wird der Blockierschuh einfach mitgenommen. Beim Wiedereinschub drücken die Federchen 372 den Schuh dann wieder in die Freigabeposition, die muldenförmig eingetieft hinter der Auflauframpe 374 vorgesehen ist.

Bei den insoweit behandelten Ausführungsformen muß der Benutzer eingreifen, um die Entnahme vornehmen zu können. Bei der folgenden Ausführungsform ist die Anordnung so getroffen, daß der aus dem Gehäuse herausziehbare Schieber das zweite Rahmenteil ist und daher den Reststapel mit herausbringt. Im Gehäuse bleibt nur ein einziges Blatt zurück. Nimmt nun der Benutzer den Reststapel, der ihm ja frei zugänglich ist, heraus und schiebt den Schieber wieder ein, so kann er erneut den Schieber ziehen, der dann das im Gehäuse verbliebene Blatt mitbringt. Mit anderen Worten ist der Wechselmechanismus erst dann funktionsfähig, wenn die Vorrichtung mindestens zwei Blätter enthält.

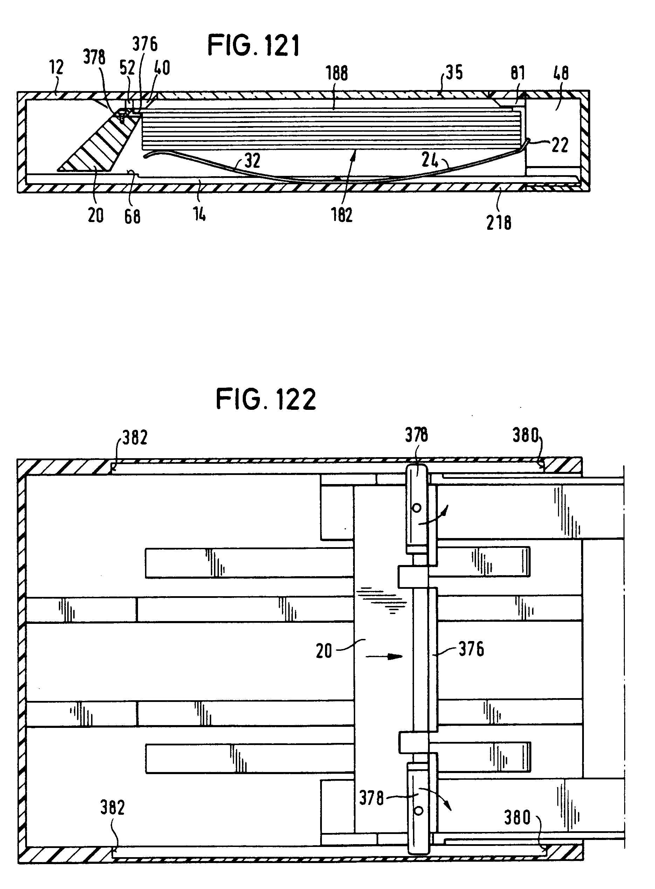

Fig. 121 zeigt im schematisierten Längsschnitt diese Lösung. Der das Einzelblatt zurückschiebende Anschlag 51 ist gegenüber dem eingangs beschriebenen Ausführungsbeispiel an einer Stelle angeordnet, daß das Einzelblatt 188 nicht vollständig bündig mit dem Reststapel wird, sondern mit seiner geschobenen Kante auf dem Separatorsteg 20 hängenbleibt. Hierfür ist eine besondere Stufe vorgesehen, die in Fig. 122 (Horizontalteilschnitt) mit 376 bezeichnet ist. Beim nächsten Wechselzyklus wird dieses Blatt aber abgeworfen, indem die beiden auf dem Separatorsteg drehbar gelagerten Hebel 378 mit ihren äußeren Hebel armen auf Anschläge 380 am Gehäuse auflaufen, so daß ihre innen liegenden Arme das Bild in Richtung Schiebergriff fördern. Beim Rückhub werden die Hebel durch Auflaufen auf Anschläge 382 wieder in die Ausgangsstellung gebracht. Wenn sich also nur dieses eine Blatt noch im Gehäuse befindet, der Reststapel aber bereits entnommen worden ist, gelangt beim Wiedereinschub des Schiebers dieses Blatt zwar in Kontakt mit dem Kontaktelement, das als schräger Haken 22 angedeutet ist, kann aber nicht in die Trenneinrichtung einlaufen (d.h. nicht unter den Separatorsteg gelangen). Die Kante rutscht daher vom Haken ab, und der Schieber nimmt das Blatt mit heraus.

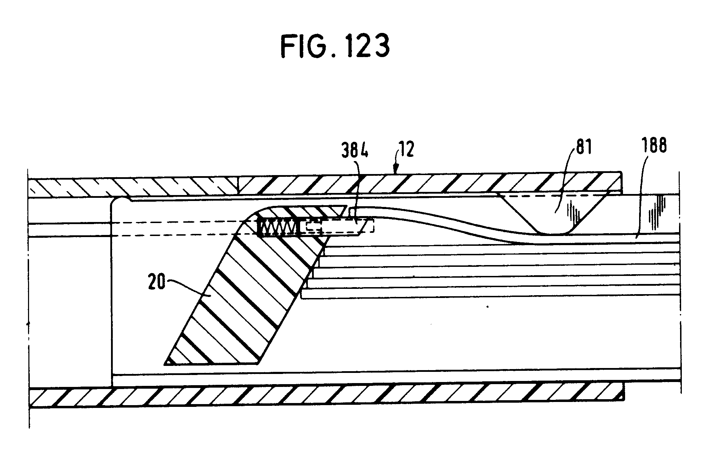

Fig. 123 zeigt eine Variante dieses Prinzips.

Die Zwischenstufe für das Blatt 188 wird von einer Platte 384 gebildet, die aus dem Separatorsteg 20 durch Federkraft ausfahrbar ist, jedoch beim Auflaufen auf Anschläge in der Schiebervollauszugsposition zurückgedrückt wird. Zugleich sorgt ein am Gehäuse 12 angeformter Niederhaltesteg 81 dafür, daß das Blatt 188 unter das Niveau der Platte gedrückt wird, wenn diese bei Beginn des Einschubs wieder aus dem Separator herauskommt.

**Patentansprüche**

**1.** Vorrichtung zum zyklischen Umschichten eines Stapels rechteckiger Blätter mit einer in einem ersten Rahmenteil angeordneten Federanordnung (24) zum Vorspannen des Stapels, mit einer Zufuhreinrichtung, die ein Kontaktelement (22) umfaßt, das ein mittels einer Trenneinrichtung abzutrennendes Einzelblatt (188) an einer Seite des Stapels entgegen einer von einem zweiten Rahmenteil (14) bei einer Auseinanderbewegung parallel zur Einzelblattebene und relativ zum ersten Rahmenteil (12) ausgeübten vorgegebenen Kraft in einer ersten Halteeinrichtung festhält, während eine im zweiten Rahmenteil (14) angeordnete zweite Halteeinrichtung (20) die Blätter des Reststapels das Kontaktelement (22) passieren läßt, und mit einer Leiteinrichtung (79, 80, 20), die beim Zusammenführen der Rahmenteile (12, 14) das Einzelblatt (188) an der anderen Seite des Stapels wieder zuführt, dadurch gekennzeichnet, daß das Kontaktelement (22) sich in Richtung der Stapeldicke erstreckt und an der in Bewegungsrichtung hinteren Querkante des Einzelblattes (188) angreift.

**2.** Vorrichtung nach Anspruch 1, dadurch gekennzeichnet, daß das Kontaktelement (22) eine hakenartig angreifende Kontaktfläche aufweist.

**3.** Vorrichtung nach Anspruch 2, dadurch gekennzeichnet, daß die Kontaktfläche in Richtung der Stapeldicke eine Abmessung aufweist, die die Dicke eines Blattes übersteigt.

**4.** Vorrichtung nach Anspruch 2 oder 3, dadurch gekennzeichnet, daß die Kontaktfläche mit der Stapelhauptebene einen von 90° abweichenden Winkel einschließt.

**5.** Vorrichtung nach Anspruch 4, dadurch gekennzeichnet, daß der Winkel in Abhängigkeit von der Stapeldicke und/oder der Relativlage der Rahmenteile veränderlich ist.

**6.** Vorrichtung nach einem der Ansprüche 4 oder 5, dadurch gekennzeichnet, daß der Winkel zwischen der Ebene des abzutrennenden Blattes und der Kontaktfläche 110° bis 135° beträgt.

**7.** Vorrichtung nach einem der Ansprüche 1 bis 6, gekennzeichnet durch ein Kontaktelement aus einem kompressiblen Material.

**8.** Vorrichtung nach einem der Ansprüche 2 bis 7, dadurch gekennzeichnet, daß die Kontaktfläche an der gesamten Längenerstrekkung der Blattkanten angreift.

**9.** Vorrichtung nach einem der Ansprüche 2 bis 7, dadurch gekennzeichnet, daß die Kontaktfläche an symmetrisch bezüglich der Mitte der Blattkante liegenden Stellen derselben angreift.

**10.** Vorrichtung nach Anspruch 1, dadurch gekennzeichnet, daß das Kontaktelement (22) an das erste Rahmenteil (12) angeformt ist und der Stapel mindestens im Bereich der erfaßten Blattkante an das Rahmenteil elastisch angedrückt wird.

**11.** Vorrichtung nach Anspruch 2, dadurch gekennzeichnet, daß die Kontaktfläche von einer am ersten Rahmenteil (12) abgestützten Feder (24) gegen den Stapel gedrückt wird.

**12.** Vorrichtung nach Anspruch 11, dadurch gekennzeichnet, daß die Feder Teil der Vorspann-Federanordnung ist.

**13.** Vorrichtung nach Anspruch 12, dadurch gekennzeichnet, daß eines der Rahmenteile ein Sichtfenster (35) zum Exponieren des darunterliegenden Blattes aufweist, gegen das der Stapel vorgespannt wird.

**14.** Vorrichtung nach einem der Ansprüche 11 bis 13, dadurch gekennzeichnet, daß die Kontaktfläche einen integralen Bestandteil der Feder (24) bildet.

**15.** Vorrichtung nach einem der Ansprüche 11 bis 14, dadurch gekennzeichnet, daß die Federanordnung zwei symmetrisch bezüglich einer sich in Rahmenteilbewegungsrichtung erstrekkenden Mittelebene angeordnete Andruckelemente umfaßt.

**16.** Vorrichtung nach Anspruch 15, dadurch gekennzeichnet, daß sich die Andruckelemente im wesentlichen parallel zur Rahmenteilbewegungsrichtung erstrecken.

**17.** Vorrichtung nach einem der Ansprüche 15 oder 16, dadurch gekennzeichnet, daß sich die Kontaktfläche jeweils nahe einem Ende der Andruckelemente (24) befindet.

**18.** Vorrichtung nach einem der Ansprüche 1 bis 17, dadurch gekennzeichnet, daß die Federanordnung Blattfedern (24, 32) umfaßt.

**19.** Vorrichtung nach Anspruch 18, dadurch gekennzeichnet, daß die Kontaktfläche jeweils an ein freies Ende einer Blattfeder (24) angeformt ist.

**20.** Vorrichtung nach Anspruch 5 und 19, dadurch gekennzeichnet, daß der Winkel in jeder von den freien Federenden einnehmbaren Funktionsstellung eingehalten wird.

**21.** Vorrichtung nach Anspruch 1, dadurch gekennzeichnet, daß die Federanordnung (24) und die Kontaktfläche derart aufeinander abgestimmt sind, daß bei unterschiedlichen Federvorspannungen infolge unterschiedlicher Blattzahl des Stapels die Kontaktfläche unterschiedliche Winkel relativ zur Stapelhauptebene definiert.

**22.** Vorrichtung nach Anspruch 19, dadurch gekennzeichnet, daß die Blattfedern (24) einen angeschnittenen Lappen mit der Kontaktfläche aufweisen, welcher Lappen gegenüber der Blattfederebene ausgestellt ist und das Kontaktelement (22) bildet.

**23.** Vorrichtung nach Anspruch 12 und 18, dadurch gekennzeichnet, daß jede Blattfeder ein zweites freies Ende (32) aufweist und alle Federarme gemeinsam die Vorspann-Federanordnung bilden.

**24.** Vorrichtung nach einem der vorangehenden Ansprüche, dadurch gekennzeichnet, daß in der auseinandergezogenen Relativlage der Rahmenteile die Federanordnung inaktiviert ist.

**25.** Vorrichtung nach Anspruch 24, dadurch gekennzeichnet, daß die Federanordnung durch Auflaufen des zweiten Rahmenteils inaktivierbar ist.

**26.** Vorrichtung nach einem der vorangehenden Ansprüche, dadurch gekennzeichnet, daß die Zufuhreinrichtung zum Einfüllen von Blättern mittels des zweiten Rahmenteils inaktivierbar ist.

**27.** Vorrichtung nach Anspruch 18, dadurch gekennzeichnet, daß die Blattfedern (24) im Bereich des Kontaktelements (22) elastisch tordierbar sind.

**28.** Vorrichtung nach Anspruch 13, dadurch gekennzeichnet, daß die Feder eine sich quer zur Rahmenteilbewegungsrichtung erstreckende Blattfeder ist.

**29.** Vorrichtung nach einem der Ansprüche 11 bis 18, dadurch gekennzeichnet, daß die Federanordnung ein auf Federn abgestütztes, starres, das Kontaktelement tragendes Bauteil (220, 240) umfaßt.

**30.** Vorrichtung nach einem der vorangehenden Ansprüche, dadurch gekennzeichnet, daß das Kontaktelement (22) zugleich Teil der ersten Halteeinrichtung ist.

**31.** Vorrichtung nach Anspruch 30, dadurch gekennzeichnet, daß das Kontaktelement mit dem Einzelblatt über den gesamten Bewegungshub der Rahmenteile im Eingriff bleibt.

**32.** Vorrichtung nach Anspruch 30 oder 31, dadurch gekennzeichnet, daß das Kontaktelement von der zweiten Halteeinrichtung (20) passierbar ist.

**33.** Vorrichtung nach Anspruch 32, dadurch gekennzeichnet, daß die zweite Halteeinrichtung einen Separatorsteg (20) mit Einschnitten (184) für den Durchlaß je eines Kontaktelements (22) umfaßt.

**34.** Vorrichtung nach einem der Ansprüche 31 bis 33, gekennzeichnet durch Mittel (75, 208) zum Rückführen des Kontaktelements (22) unter den Reststapel.

**35.** Vorrichtung nach einem der Ansprüche 31 bis 34, gekennzeichnet durch ein mit dem Kontaktelement verbundenes Abstützelement (180), das von dem zweiten Rahmenteil (14) in der auseinandergezogenen Postion der Rahmenteile gehalten ist.

**36.** Vorrichtung nach Anspruch 1, dadurch gekennzeichnet, daß die erste Halteeinrichtung getrennt von der Zufuhreinrichtung ausgebildet ist und erst nach dem Abtrennen des Einzelblattes vom Reststapel aktiv ist.

**37.** Vorrichtung nach Anspruch 36, dadurch gekennzeichnet, daß die Zufuhreinrichtung, von der Rahmenteilbewegung gesteuert, inaktivierbar ist, nachdem die erste Halteeinrichtung (26, 28) aktiviert ist.

**38.** Vorrichtung nach Anspruch 23, dadurch gekennzeichnet, daß die zweiten freien Federarme (32) ein Element der ersten Halteeinrichtung bilden.

**39.** Vorrichtung nach den Ansprüchen 37 und 38, dadurch gekennzeichnet, daß das zweite Rahmenteil (14) an den Federarmen angreifende Steuermittel (75, 20) für das Aktivieren bzw. Inaktivieren der Zufuhreinrichtung bzw. der ersten Halteeinrichtung aufweist.

**40.** Vorrichtung nach Anspruch 39, dadurch gekennzeichnet, daß die Steuermittel auf die Federarme auflaufende und sie vom Stapel abdrückende Kufen (75) umfassen.

**41.** Vorrichtung nach Anspruch 39, dadurch gekennzeichnet, daß die zweite Halteeinrichtung von einem quer zur Rahmenteilbewegung verlaufenden Separatorsteg (20) gebildet ist, der zugleich ein Element der Steuermittel ist.

**42.** Vorrichtung nach einem der vorangehenden Ansprüche, dadurch gekennzeichnet, daß das erste Rahmenteil ein Gehäuse (12) ist, aus dem das zweite Rahmenteil in Form eines Schiebers (14) herausziehbar ist.

**43.** Vorrichtung nach Anspruch 1 oder 2, gekennzeichnet durch Führungsmittel zum Überleiten der den Reststapel bildenden Blätter über das Kontaktelement.

**44.** Vorrichtung nach Anspruch 1, dadurch gekennzeichnet, daß das Kontaktelement durch die den Reststapel bildenden Blätter selbst auslenkbar ist.

**45.** Vorrichtung nach Anspruch 43, dadurch gekennzeichnet, daß die Führungsmittel an dem Kontaktelement selbst ausgebildet sind.

**46.** Vorrichtung nach Anspruch 43 oder 45, dadurch gekennzeichnet, daß die Führungsmittel eine schräg verlaufende Rampe umfassen.

## Claims

**1.** A device for the cyclic rearrangement of a pile of rectangular sheets with a spring arrangement (24) arranged in a first frame part to bias the pile, with a feeding means comprising a contact member (22) which retains an individual sheet (188), to be separated by a separating means, at one end of the pile in a first retaining means against a predetermined force exerted by a second frame part (14) during an outward movement parallel to the plane of the individual sheet and relative to the first frame part (12), while a second retaining means (20) arranged in the second frame part (14) allows the sheets of the remainder of the pile to pass the contact member (22), and with a guide means (79,80,20) which when the frame parts (12,14) are pushed together returns the individual sheet (188) to the other end of the pile, characterised in that the contact member (22) extends in the direction of the thickness of the pile and engages the rear transverse edge, as seen in the direction of movement, of the individual sheet (188).

**2.** A device according to Claim 1, characterised in that the contact member (22) has a contact face engaging in the manner of a hook.

**3.** A device according to Claim 2, characterised in that the contact face has, in the direction of the thickness of the pile, a dimension which is greater than the thickness of one sheet.

**4.** A device according to Claim 2 or 3, characterised in that the contact face encloses with the principle plane of the pile an angle other than 90°.

**5.** A device according to Claim 4, characterised in that the angle is variable according to the thickness of the pile and/or the relative position of the frame parts.

**6.** A device according to either of Claims 4 and 5, characterised in that the angle between the plane of the sheet to be separated and the contact face is in the range from 110° to 135°.

**7.** A device according to one of Claims 1 to 6, characterised by a contact member made of a compressible material.

**8.** A device according to one of Claims 2 to 7, characterised in that the contact face engages the complete length of the edges of the sheet.

**9.** A device according to one of Claims 2 to 7, characterised in that the contact face engages with points on the edge of the sheet which are symmetrically placed with respect to the centre thereof.

**10.** A device according to Claim 1, characterised in that the contact member (22) is formed on the first frame part (12) and the pile is pressed resiliently against the frame part at least in the region of the sheet edge which is grasped.

**11.** A device according to Claim 2, characterised in that the contact face is pressed against the pile by a spring (24) supported on the first frame part (12).

**12.** A device according to Claim 11, characterised in that the spring is part of the bias spring arrangement.

**13.** A device according to Claim 12, characterised in that one of the frame parts has a viewing window (35) to expose the underlying sheet to view and against which window the pile is biased.

**14.** A device according to one of Claims 11 to 13, characterised in that the contact face forms an integral part of the spring (24).

**15.** A device according to one of Claims 11 to 14, characterised in that the spring arrangement comprises two pressing members arranged symmetrically with respect to a centre plane extending in the direction of movement of the frame parts.

**16.** A device according to Claim 15, characterised in that the pressing members extend substantially parallel to the direction of movement of the frame parts.

**17.** A device according to either of Claims 15 and 16, characterised in that the contact face is located near a respective end of the pressing members (24).

**18.** A device according to one of Claims 1 to 17, characterised in that the spring arrangement comprises leaf springs (24,32).

**19.** A device according to Claim 18, characterised in that the contact face is formed on a respective free end of a leaf spring (24).

**20.** A device according to Claim 5 and Claim 19, characterised in that in each of the operating positions that can be assumed by the free spring ends the angle is maintained.

**21.** A device according to Claim 1, characterised in that the spring arrangement (24) and the contact face are so matched to each other that when the spring bias varies as a result of the varying number of sheets in the pile, the contact face defines different angles relative to the principle plane of the pile.

**22.** A device according to Claim 19, characterised in that the leaf springs (24) have a tab, defined by cuts and having the contact face, which tab is off-set in relation to the plane of the leaf springs and forms the contact member (22).

**23.** A device according to Claim 12 and Claim 18, characterised in that each leaf spring has a second free end (32) and all the spring arms together form the bias spring arrangement.

**24.** A device according to one of the preceding Claims, characterised in that when the frame parts are in the relative position in which they are pulled apart the spring arrangement is rendered inoperative.

**25.** A device according to Claim 24, characterised in that the spring arrangement can be rendered inoperative by the running-on of the second frame part.

**26.** A device according to one of the preceding Claims, characterised in that the feeding means for introducing sheets can be rendered inoperative by means of the second frame part.

**27.** A device according to Claim 18, characterised in that the leaf springs (24) are able to be resiliently twisted in the region of the contact member (22).

**28.** A device according to Claim 13, characterised in that the spring is a leaf spring extending transversely to the direction of movement of the frame parts.

**29.** A device according to one of Claims 11 to 18, characterised in that the spring arrangement includes a rigid component (220,240) supported on springs and carrying the contact member.

**30.** A device according to one of the preceding Claims, characterised in that the contact member (22) is at the same time part of the first retaining means.

**31.** A device according to Claim 30, characterised in that the contact member remains in engagement with the individual sheet over the entire travel of the frame parts.

**32.** A device according to Claim 30 or 31, characterised in that the contact member is able to be passed by the second retaining means (20).

**33.** A device according to Claim 32, characterised in that the second retaining means comprises a separator bar (20) with notches (184) each of which allows a contact member (22) to pass through.

**34.** A device according to one of Claims 31 to 33, characterised by means (75,208) for returning the contact member (22) beneath the remainder of the pile.

**35.** A device according to one of Claims 31 to 34, characterised by a support member (180) which is connected to the contact member and, in the position in which the frame parts are pulled apart, is held by the second frame part (14).

**36.** A device according to Claim 1, characterised in that the first retaining means is separate from the feeding means and is only active once the individual sheer has been separated from the remainder of the pile.

**37.** A device according to Claim 36, characterised in that the feeding means, controlled by the movement of the frame parts, can be rendered inoperative after the first retaining means (26,28) is activated.

**38.** A device according to Claim 23, characterised in that the second free spring arms (32) form an element of the first retaining means.

**39.** A device according to Claims 37 and 38, characterised in that the second frame part (14) has control means (75,20) engaging the spring arms in order to activate or de-activate the feeding means and/or the first retaining means.

**40.** A device according to Claim 39, characterised in that the control means comprise runners (75) which run onto the spring arms and press them away from the pile.

**41.** A device according to Claim 39, characterised in that the second retaining means is formed by a separator bar (20) which extends transversely to the movement of the frame parts and at the same time forms an element of the control means.

**42.** A device according to one of the preceding Claims, characterised in that the first frame part (12) is a housing, out of which the second frame part, in the shape of a slider (14), can be pulled.

**43.** A device according to Claim 1 or 2, characterised by guiding means to guide the sheets forming the remainder of the pile over the contact member.

**44.** A device according to Claim 1, characterised in that the contact member can be deflected by means of the sheets themselves which form the remainder of the pile.

**45.** A device according to Claim 43, characterised in that the guiding means are formed on the contact member itself.

**46.** A device according to Claim 43 or 45, characterised in that the guiding means comprise an oblique ramp.

**Revendications**

**1.** Dispositif de reclassement cyclique d'une pile de feuilles rectangulaires, comportant un système à ressort (24) disposé dans une première pièce formant cadre et destiné à assurer une précontrainte de la pile, comportant un dispositif d'alimentation comprenant un élément de contact (22), qui maintient fixe dans un premier dispositif de maintien, une feuille individuelle (188) devant être séparée au moyen d'un séparateur, sur un côté de la pile et à l'encontre d'une force prédéterminée exercée par une seconde pièce formant cadre (14) lors d'un mouvement d'écartement parallèlement au plan de la feuille individuelle et par rapport à la première pièce formant cadre (12), tandis qu'un second dispositif de maintien (20) disposé dans la seconde pièce formant cadre (14), laisse passer les feuilles de la pile restante sur l'élément de contact (22), et comprenant un dispositif de guidage (79,80,20) qui lors du rapprochement des deux pièces formant cadre (12, 14) ramène à nouveau la feuille individuelle (188) sur l'autre côté de la pile, caractérisé en ce que l'élément de contact (22) s'étend dans la direction de l'épaisseur de la pile et agit sur le bord transversal de la feuille individuelle (188) situé à l'arrière en considérant le sens du mouvement.

**2.** Dispositif selon la revendication 1, caractérisé en ce que l'élément de contact (22) comporte une surface de contact en forme de crochet.

**3.** Dispositif selon la revendication 2, caractérisé en ce que la surface de contact présente dans la direction de l'épaisseur de la pile, une dimension excèdant l'épaisseur d'une feuille.

**4.** Dispositif selon la revendication 2 ou 3, caractérisé en ce que la surface de contact forme avec la surface principale de la pile, un angle différent de 90°.

**5.** Dispositif selon la revendication 4, caractérisé en ce que l'angle est variable en fonction de l'épaisseur de la pile et/ou de la position relative des pièces formant cadre.

**6.** Dispositif selon l'une des revendications 4 ou 5, caractérise en ce que l'angle entre le plan de la feuille à séparer et la surface de contact vaut 110° à 135°.

**7.** Dispositif selon l'une des revendications 1 à 6, caractérisé par un élément de contact en un matériau compressible.

**8.** Dispositif selon l'une des revendications 2 à 7, caractérisé en ce que la surface de contact agit sur la longueur totale des bords de feuille.

**9.** Dispositif selon l'une des revendications 2 à 7, caractérisé en ce que la surface de contact agit en des endroits du bord de feuille, symétriques par rapport au milieu du bord de feuille.

**10.** Dispositif selon la revendication 1, caractérisé en ce que l'élément de contact (22) est formé sur la première pièce formant cadre (12), et en ce que la pile est appliquée élastiquement contre la pièce formant cadre, au moins dans la zone du bord de feuille ayant été saisi.

**11.** Dispositif selon la revendication 2, caractérisé en ce que la surface de contact est appliquée contre la pile par un ressort (24) s'appuyant sur la première pièce formant cadre (12).

**12.** Dispositif selon la revendication 11, caractérisé en ce que le ressort fait partie du système de ressort de précontrainte.

**13.** Dispositif selon la revendication 12, caractérisé en ce que l'une des pièces formant cadre comporte une fenêtre transparente (35) pour l'exposition de la feuille située en dessous et contre laquelle la pile est précontrainte.

**14.** Dispositif selon l'une des revendications 11 à 13, caractérisé en ce que la surface de contact constitue une partie totalement intégrante du ressort (24).

**15.** Dispositif selon l'une des revendications 11 à 14, caractérisé en ce que le système à ressort comprend deux éléments applicateurs disposés symétriquement par rapport à un plan médian s'étendant dans la direction du mouvement des pièces formant cadre.

**16.** Dispositif selon la revendication 15, caractérisé en ce que les éléments applicateurs s'étendent sensiblement de manière parallèle à la direction du mouvement des pièces formant cadre.

**17.** Dispositif selon l'une des revendications 15 ou 16, caractérisé en ce que la surface de contact se trouve à proximité d'une extrémité de chacun des éléments applicateurs (24).

**18.** Dispositif selon l'une des revendications 1 à 17, caractérisé en ce que le système à ressort comprend des ressorts à lame (24, 32).

**19.** Dispositif selon la revendication 18, caractérisé en ce que la surface de contact est formée à l'extrémité libre de chaque ressort à lame (24).

**20.** Dispositif selon les revendications 5 et 19, caractérisé en ce que l'angle est respecté pour chacune des positions de fonctionnement susceptibles d'être prises par les extrémités libres de ressort.

**21.** Dispositif selon la revendication 1, caractérisé en ce que le système à ressort (24) et la surface de contact sont ajustés l'un par rapport à l'autre de manière qu'en raison de différentes précontraintes de ressort du fait d'un nombre de feuilles différent de la pile, la surface de contact définit des angles différents par rapport au plan principal de la pile.

**22.** Dispositif selon la revendication 19, caractérisé en ce que les ressorts à lame (24) comportent une languette découpée présentant la surface de contact, cette languette étant située contre le plan du ressort à lame et formant l'élément de contact (22).

**23.** Dispositif selon les revendications 12 et 18, caractérisé en ce que chaque ressort à lame présente une seconde extrémité libre (32) et en ce que tous les bras de ressort constituent ensemble le système à ressort de précontrainte.

**24.** Dispositif selon l'une des revendications précédentes, caractérisé en ce que le système à ressort est rendu inactif dans la position relative écartée des pièces formant cadre.

**25.** Dispositif selon la revendication 24, caractérisé en ce que le système à ressort peut être rendu inactif en étant comprimé par la seconde pièce formant cadre.

**26.** Dispositif selon l'une des revendications précédentes, caractérisé en ce que le dispositif d'alimentation pour le remplissage de feuilles peut être rendu inactif au moyen de la seconde pièce formant cadre.

**27.** Dispositif selon la revendication 18, caractérisé en ce que les ressorts à lame (24) peuvent être tordus élastiquement dans la zone de l'élément de contact (22).

**28.** Dispositif selon la revendication 13, caractérisé en ce que le ressort est un ressort à lame s'étendant transversalement à la direction du mouvement des pièces formant cadre.

**29.** Dispositif selon l'une des revendications 11 à la, caractérisé en ce que le système à ressort comprend une pièce de construction (220, 240) rigide, s'appuyant sur des ressorts et supportant l'élément de contact.

**30.** Dispositif selon l'une des revendications précédentes, caractérisé en ce que l'élément de contact (22) fait simultanément partie du premier dispositif de maintien.

**31.** Dispositif selon la revendication 30, caractérisé en ce que l'élément de contact reste en contact avec la feuille individuelle, tout au long de la course de déplacement des pièces formant cadre.

**32.** Dispositif selon la revendication 30 ou 31, caractérisé en ce que le second dispositif de maintier (20) peut passer au-delà de l'élément de contact.

**33.** Dispositif selon la revendication 32, caractérisé en ce que le second dispositif de maintien comprend une nervure de séparateur (20) comportant des découpes (184) dont chacune permet le passage d'un élément de contact (22).

**34.** Dispositif selon l'une des revendications 31 à 33, caractérisé par des moyens (75, 208) pour ramener l'élément de contact (22) sous la pile restante.

**35.** Dispositif selon l'une des revendications 31 à 34, caractérisé par un élément de support (180) qui est relié à l'élément de contact, et qui est maintenu par la seconde pièce formant cadre (14), dans la position écartée des pièces formant cadre.

**36.** Dispositif selon la revendication 1, caractérisé en ce que le premier dispositif de maintien est réalisé de manière séparée du dispositif d'alimentation et est actif uniquement après la séparation de la feuille individuelle de la pile restante.

**37.** Dispositif selon la revendication 36, caractérise en ce que le dispositif d'alimentation peut être rendu inactif en étant commandé par le mouvement des pièces formant cadre, après que le premier dispositif de maintien (26, 28) a été rendu actif.

**38.** Dispositif selon la revendication 23, caractérisé en ce que les seconds bras de ressort libres (32) forment un élément du premier dispositif de maintien.

**39.** Dispositif selon les revendications 37 et 38, caractérisé en ce que la seconde pièce formant cadre (14) comporte des moyens de commande (75, 20) agissant sur les bras de ressort et destinés à rendre actif et respectivement inactif le dispositif d'alimentation et respectivement le premier dispositif de maintien.

**40.** Dispositif selon la revendication 39, caractérisé en ce que les moyens de commande comportent des patins (75) comprimant les bras de ressort en les repoussant de la pile.

**41.** Dispositif selon la revendication 39, caractérisé en ce que le second dispositif de maintien est formé par une nervure de séparateur (20) qui s'étend transversalement au mouvement des pièces formant cadre et qui constitue simultanément un élément des moyens de commande.

**42.** Dispositif selon l'une des revendications précédentes, caractérisé en ce que la première pièce formant cadre est un boîtier (12) duquel peut être extrait par coulissement, la seconde pièce formant cadre se présentant sous la forme d'un tiroir (14).

**43.** Dispositif selon la revendication 1 ou 2, caractérisé par des moyens de guidage pour faire passer les feuilles constituant la pile restante, au-dessus de l'élément de contact.

**44.** Dispositif selon la revendication 1, caractérisé en ce que l'élément de contact peut être dévié par les feuilles elles-mêmes constituant la pile restante.

**45.** Dispositif selon la revendication 43, caractérisé en ce que les moyens de guidage sont réalisés sur l'élément de contact lui-même.

**46.** Dispositif selon la revendication 43 ou 45, caractérisé en ce que les moyens de guidage comprennent une rampe inclinée.

FIG. 6
FIG. 1

FIG. 2
88
87
58
12
62
64
89
86
90
20
73
86
63
85
67
86
89
91
75
60
55
44
92
50
14
61
FIG. 3
88
58
104
12
68
64
72
40
52
77
74
32
20
35
28
67
26
63
66
83
59
81
60
55
44
92
82
46
84
38
14
56
48
61

FIG. 4
88
64
12
58
78
104
40
52
77
62
94
32
20
35
63
73
67
75
24
66
22
81
60
44
55
92
14
61
FIG. 5
88
12
64
104
40
78
52
77
62
94
32
35
80
63
79
67
30
66
81
73
20
60
58
44
14
55

35
20
69
71
28
26
62
67
12
63
7
35
93
14
40
42
20
69
28
86
85
90
71
86
28
26
67
12
63
26
62
14
55
102
103
95
16
44
97
99
101
104
10
10
62
94
96
98
100
12
63
14
20
95
96
99
97
44
104
94
9
9
62
12
101
98
100
16
FIG. 7

FIG. 8

FIG. 9

FIG. 10

FIG. 11
106
108
110
112
12
14
114
FIG. 12
106
108
110
112
12
14
114

14
87
14
146
68
54
42
20
93
20
32
80
32
80
26
128
128
118
153
134
24
162
166
176
170
174
168
166
172
166
22
34
-35-
138
140
22
79
130
59
20
160
18
116
62
64
12
44
14
55
82
38
92
48
61
14

FIG. 13

FIG. 14
FIG. 15
FIG. 16
FIG. 17
FIG. 18
61
48
38
57
84
82
44
14
20
71
83
388
81
69
130
134
35
80
32
24
68
87
64
62
126
118
120
124
122
40
28
146
153
93
87
134
20
52
36
79

FIG.19
132
140
134
68
62
FIG.20
132
140
26
134
138
68
FIG.21
136
134
62
FIG.22
26
134
136
153
136
134
-62-
26
138
68

FIG. 23
FIG. 24
FIG. 25
20
87
146
148
150
152
153
154
156
158
62

FIG. 26
14
130
164
164
162
160
116
44
FIG. 27
14
44
116
18
20
162
164
170
166
174
62
176
118
166
172
166
168

FIG. 28
20
69
68
26
134
28
FIG. 29
20
69
188
26
178
68
134
FIG. 30
22
180
180
24
FIG. 31
180
22
24

FIG. 32
68
72
134
144
142
26
FIG. 33
138

FIG. 34
12
40
182
14
22
48
20
44
24
FIG. 35
12
182
14
22
48
20
44
24
FIG. 36
12
182
14
22
20
44
24
37
48
FIG. 37
182
24
22
FIG. 38
12
182
14
22
20
44
24
39
48
FIG. 39
182
24
22
FIG. 40
12
20
182
14
41
44
24
22
48
FIG. 41
182
24
22

FIG.43
22
24
FIG. 42
14
22
24
79
35
186
52
20
184
12
FIG. 44
14
22
24
79
20
184
188
186
52
12
FIG.45
14
20
22
184
24
79
188
186
52
12
FIG. 46
14
20
184
22
24
79
188
186
52
12

FIG.47
14
12
24
208
35
75
204
87
186
200
20
202
FIG.48
22
76
24
FIG.49
12
76
22
14
206
24
204
75
44
87
186
200
20
202
FIG.50
22
206
76
24
FIG.51
14
76
208
22
24
75
186
202
20
200
40
12
FIG.52
14
44
75
202
20
208
24
186
200
12

14
22
24
210
12
20
14
22
210
24
20
188

FIG. 53

FIG. 54

35
12
14
212
188
216
214
22
218
24
FIG. 55

20
40
182
35
81
12
222
22
14
188
24
224
220
226
22
24
228
-188-
FIG. 56

FIG. 57

12
20
230
22
14
68
24
FIG. 58
12
FIG. 60
20
14
68
24
FIG. 59
12
14
20
68
FIG. 61
12
14
20
68
FIG. 62
44
12
20
68
24
234
232
236
24
22
14
58
58

FIG. 63
64
240
44
12
240
14
20
20
188
64
68
72
218
238
FIG. 64
240
12
20
44
238
68
14
218
FIG. 65
66
20
44
12
68
71
20
72
188
66
242
218
FIG. 66
12
20
71
242
44
218

FIG. 67
FIG. 68
FIG. 69
FIG. 70
12
20
44
68
70
72
188
218
240
244
246
248
250

FIG. 72
FIG. 71
FIG. 74
FIG. 73
252
251
240
68
20
254
218
44
12
14
188
72
258
256
246

FIG. 76
12
35
20
264
262
260
240
14
FIG. 75
14
20
264
188
240
260
76
76
35
12
FIG. 78
35
20
262
12
240
266
FIG. 77
188
20
240
78
78
182
20
266

81
44
274
270
272
268
20
276
274
270
272
268
14
80
81
80
44
12
12
274
270
44
272
14
44
268
274
274
12
14
270
270
268
20
272
276
272
44

FIG.79

FIG.80

FIG.81

FIG.82
14
24
32
20
12
278
280
FIG.84
14
24
20
188
32
12
278
280
FIG.83
20
278
282
14
12
280

FIG.85
FIG.86
FIG.87
FIG.88
14
12
22
24
20
32
188
284
286
288
266
290
292

12
290
294
296
298
188
218
20
44
14

FIG. 89

FIG. 91
12
20
300
218
44
14
304
302
FIG. 90
14
44
12
218
20
300
91
91
218
FIG. 92
14
44
302
20
304
300
12

FIG. 93
FIG. 94
FIG. 95
12
14
20
44
94
94'
188
300
306

FIG. 96
12
266
188
300
20
44
14
FIG. 97
12
308
310
308
20
36
182

12
52
32
35
80
20
81
314
312
182
14
FIG. 98
12
44
14
FIG. 99
40
52
20
35
12
FIG. 100
52
316
20
35

52
32
12
188
79
80
310
20
14
FIG. 101
320
318
FIG. 102
FIG. 103
FIG. 104

FIG. 105
FIG. 106
FIG.107
FIG.108
12
14
20
52
108
322
324
326
328
330
332
334
336
338
340
342

FIG. 109
44
20
346
344
26
136
52
12
14
348
12
44
20
344
26
348
136
344
348
26
136
20
344
44
FIG. 110

FIG.111
26
186
350
12
20
44
14
FIG.113
26
14
350
350
352
20
12
FIG.112
26
14
350
12
20
44

FIG. 114
12
20
356
188
87
354
218
FIG. 115
12
44
362
360
20
364
87
358
218
FIG. 116
12
117
14
87
366
118
20
89
85
89
91
89
117
FIG. 117
12
20
91
85
FIG. 118
12
85
91
89
89
91

FIG. 119

20
20
12
14
69
370
372
68
370
87
69
368
374
368

372
368
68
374
12
370
119
119
372
68

FIG. 120

FIG. 121

12
378
376
52
40
188
35
81
48
22
32
24
20
68
14
182
218

FIG. 122

382
378
380
20
376
378
382
380

FIG. 123

384
12
81
188
20